# EUROPEAN PATENT APPLICATION

(11) **EP 4 528 028 A2**
(43) Date of publication of application: **26.03.2025**
(21) Application number: 25155901.9
(22) Date of filing: 09.12.2022
(51) Int. Cl.: E01B 25/28

(54) **CROSSING WITH THERMAL EXPANSION JOINT FOR A RAIL-BASED GRID**

(30) Priority: 16.12.2021 NO 20211521
(62) Divisional of application: 22835277.9
(71) Applicant: AutoStore Technology AS, 5578 Nedre Vats (NO)
(72) Inventor: GILJE, Kjetil, 5578 Nedre Vats (NO)
(74) Representative: Kilburn & Strode LLP

(57) **Abstract**

The invention relates to a crossing (30; 30'; 30"; 30'") for a grid-based rail system (108) of an automated storage and retrieval system (1), wherein the crossing (30; 30'; 30"; 30'") comprises a first rail (130) extending in a first direction (X) and a second rail (131) extending in a second direction (Y) which is perpendicular to the first direction (X), wherein the first and second rails (130, 131) each comprise at least one track (125) for guiding wheels (201b, 201c; 301b, 301c; 401b, 401c) of a container handling vehicle (201; 301;401) in a longitudinal direction of said rail (130, 131), the first and second rails (130, 131) engaging one another to form the crossing (30; 30'; 30"; 30'") where the at least one track (125) of the first rail (130) crosses a path of the at least one track of the second rail (131), the crossing (30; 30'; 30"; 30'") being configured to be supported by an upright member (102) from below, and wherein at least one of the first and second rails (130, 131) is provided as a pair of rail sections (130', 130"; 13 1', 131") arranged in an end-to-end manner in the longitudinal direction of said rail (130, 131), the ends of the rail sections (130', 130"; 13 1', 13 1") meeting in a central portion of the crossing (30; 30'; 30"; 30'"), and the rail sections (130', 130"; 131', 131") being configured to permit a range of movement of one end relative to the other in the longitudinal direction of the said rail (130, 131) so as to provide a thermal expansion joint (35', 35", 35'") for the said rail (130, 131) that is arranged within a volume of the crossing (30; 30'; 30"; 30'") defined by the engagement of the first and second rails (130, 131). It is further described a storage system comprising the crossing and providing a crossing (30; 30'; 30"; 30'") in a grid-based rail system (108) of an automated storage and retrieval system (1), the crossing (30; 30'; 30"; 30'") allowing for thermal expansion and contraction of rails (110, 111, 130, 131) extending through the crossing (30; 30'; 30"; 30‴).

## Description

The present invention relates to a crossing with a thermal expansion joint for a rail-based grid. The invention also relates to an automated storage and retrieval system comprising one or more such crossings and methods of connecting a crossing to allow for thermal expansion of a rail running through the crossing.

### BACKGROUND AND PRIOR ART

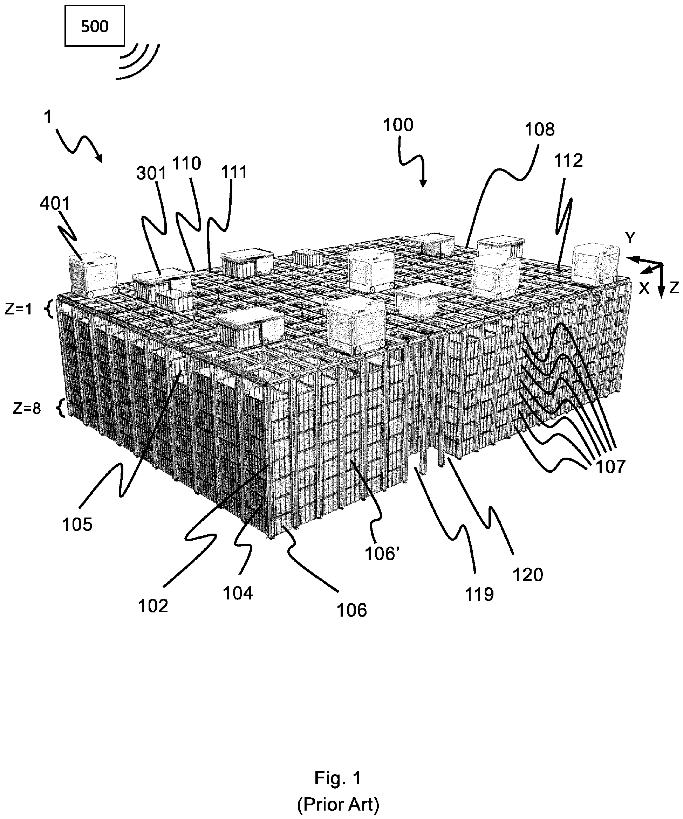

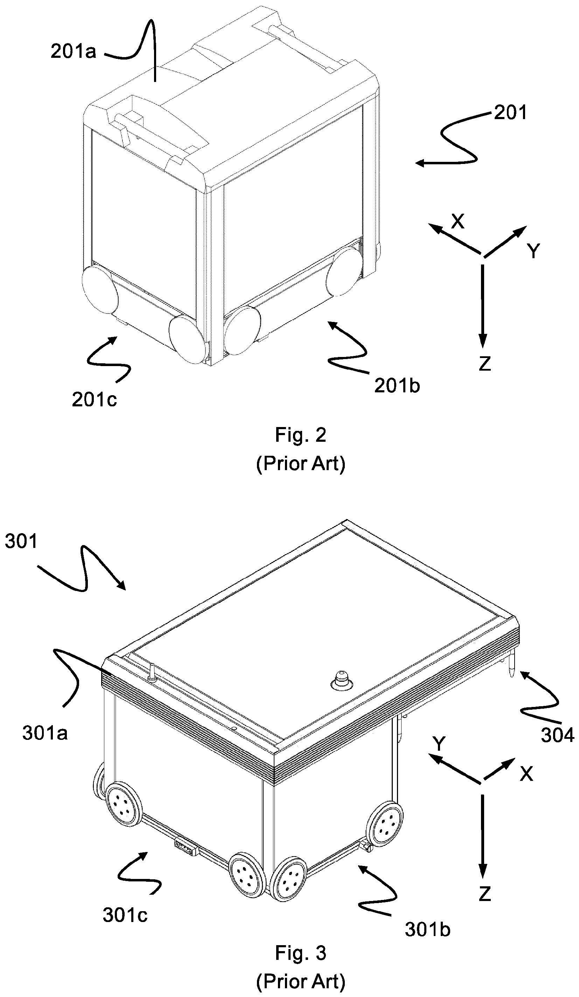

Fig. 1 discloses a prior art automated storage and retrieval system 1 with a framework structure 100 and Figs. 2, 3 and 4 disclose three different prior art container handling vehicles 201,301,401 suitable for operating on such a system 1.

The framework structure 100 comprises upright members 102 and a storage volume comprising storage columns 105 arranged in rows between the upright members 102. In these storage columns 105 storage containers 106, also known as bins, are stacked one on top of one another to form stacks 107. The members 102 may typically be made of metal, e.g. extruded aluminum profiles.

The framework structure 100 of the automated storage and retrieval system 1 comprises a rail system 108 arranged across the top of framework structure 100, on which rail system 108 a plurality of container handling vehicles 201,301,401 may be operated to raise storage containers 106 from, and lower storage containers 106 into, the storage columns 105, and also to transport the storage containers 106 above the storage columns 105. The rail system 108 comprises a first set of parallel rails 110 arranged to guide movement of the container handling vehicles 201,301,401 in a first direction X across the top of the frame structure 100, and a second set of parallel rails 111 arranged perpendicular to the first set of parallel rails 110 to guide movement of the container handling vehicles 201,301,401 in a second direction *Y* which is perpendicular to the first direction *X.* Containers 106 stored in the columns 105 are accessed by the container handling vehicles 201,301,401 through access openings 112 in the rail system 108. The container handling vehicles 201,301,401 can move laterally above the storage columns 105, i.e. in a plane which is parallel to the horizontal X-Y plane.

The upright members 102 of the framework structure 100 may be used to guide the storage containers during raising of the containers out from and lowering of the containers into the columns 105. The stacks 107 of containers 106 are typically self-supporting.

Each prior art container handling vehicle 201,301,401 comprises a vehicle body 201a,301a,401a and first and second sets of wheels 201b,201c,301b,301c,401b,401c which enable the lateral movement of the container handling vehicles 201,301,401 in the X direction and in the Y direction, respectively. In Figs. 2, 3 and 4 two wheels in each set are fully visible. The first set of wheels 201b,301b,401b is arranged to engage with two adjacent rails of the first set of parallel rails 110, and the second set of wheels 201c,301c,401c is arranged to engage with two adjacent rails of the second set of parallel rails 111. At least one of the sets of wheels 201b,201c,301b,301c,401b,401c can be lifted and lowered, so that the first set of wheels 201b,301b,401b and/or the second set of wheels 201c,301c,401c can be engaged with the respective set of parallel rails 110, 111 at any one time.

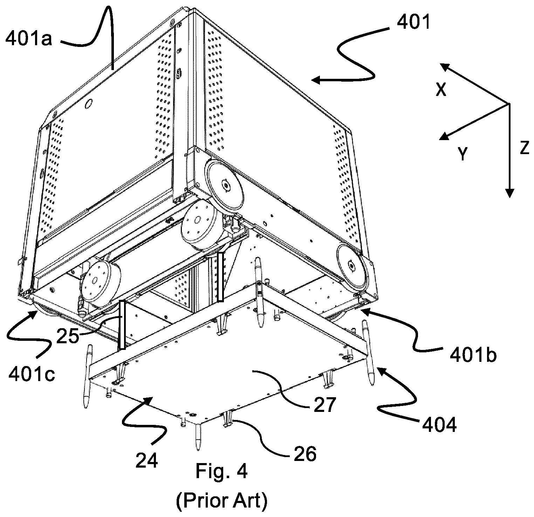

Each prior art container handling vehicle 201,301,401 also comprises a lifting device for vertical transportation of storage containers 106, e.g. raising a storage container 106 from, and lowering a storage container 106 into, a storage column 105. The lifting device comprises one or more gripping / engaging devices which are adapted to engage a storage container 106, and which gripping / engaging devices can be lowered from the vehicle 201,301,401 so that the position of the gripping / engaging devices with respect to the vehicle 201,301,401 can be adjusted in a third direction Z which is orthogonal the first direction *X* and the second direction Y. Parts of the gripping device of the container handling vehicles 301,401 are shown in Figs. 3 and 4 indicated with reference number 304,404. The gripping device of the container handling device 201 is located within the vehicle body 201a in Fig. 2 and is thus not shown. The lifting device may comprise a lifting frame 27 suspended from lifting bands 25. The lifting bands 25 may provide power and communication between the container handling vehicle and the lifting frame 27. The lifting frame 27 may comprise gripping engaging devices 26 for connection to gripping recesses of a storage container 106.

Conventionally, and also for the purpose of this application, Z=1 identifies the uppermost layer available for storage containers below the rails 110,111, i.e. the layer immediately below the rail system 108, Z=2 the second layer below the rail system 108, *Z*=3 the third layer etc. In the exemplary prior art disclosed in Fig. 1, *Z*=8 identifies the lowermost, bottom layer of storage containers. Similarly, *X=*1*...n* and *Y=*1*...n* identifies the position of each storage column 105 in the horizontal plane. Consequently, as an example, and using the Cartesian coordinate system *X*, *Y, Z* indicated in Fig. 1, the storage container identified as 106' in Fig. 1 can be said to occupy storage position *X*=17, *Y=*1, *Z*=6. The container handling vehicles 201,301,401 can be said to travel in layer *Z*=0, and each storage column 105 can be identified by its *X* and *Y* coordinates. Thus, the storage containers shown in Fig. 1 extending above the rail system 108 are also said to be arranged in layer *Z*=0.

The storage volume of the framework structure 100 has often been referred to as a grid 104, where the possible storage positions within this grid are referred to as storage cells. Each storage column may be identified by a position in an *X-* and *Y-*direction, while each storage cell may be identified by a container number in the *X*-, *Y-* and *Z*-direction.

Each prior art container handling vehicle 201,301,401 comprises a storage compartment or space for receiving and stowing a storage container 106 when transporting the storage container 106 across the rail system 108. The storage space may comprise a cavity arranged internally within the vehicle body 201a,401a as shown in Figs. 2 and 4 and as described in e.g. WO2015/193278A1 and WO2019/206487A1, the contents of which are incorporated herein by reference.

Fig. 3 shows an alternative configuration of a container handling vehicle 301 with a cantilever construction. Such a vehicle is described in detail in e.g. NO317366, the contents of which are also incorporated herein by reference.

The cavity container handling vehicle 201 shown in Fig. 2 may have a footprint that covers an area with dimensions in the X and Y directions which is generally equal to the lateral extent of a storage column 105, e.g. as is described in WO2015/193278A1, the contents of which are incorporated herein by reference. The term `lateral' used herein may mean 'horizontal'.

Alternatively, the cavity container handling vehicles 401 may have a footprint which is larger than the lateral area defined by a storage column 105 as shown in Fig. 1 and 4, e.g. as is disclosed in WO2014/090684A1 or WO2019/206487A1.

The rail system 108 typically comprises rails with grooves in which the wheels of the vehicles run. Alternatively, the rails may comprise upwardly protruding elements, where the wheels of the vehicles comprise flanges to prevent derailing. These grooves and upwardly protruding elements are collectively known as tracks. Each rail may comprise one track, or each rail 110,111 may comprise two parallel tracks. In other rail systems 108, each rail in one direction (e.g. an X direction) may comprise one track and each rail in the other, perpendicular direction (e.g. a Y direction) may comprise two tracks. Each rail 110,111 may also comprise two track members that are fastened together, each track member providing one of a pair of tracks provided by each rail.

WO2018/146304A1, the contents of which are incorporated herein by reference, illustrates a typical configuration of rail system 108 comprising rails and parallel tracks in both *X* and *Y* directions.

In the framework structure 100, a majority of the columns 105 are storage columns 105, i.e. columns 105 where storage containers 106 are stored in stacks 107. However, some columns 105 may have other purposes. In Fig. 1, columns 119 and 120 are such special-purpose columns used by the container handling vehicles 201,301,401 to drop off and/or pick up storage containers 106 so that they can be transported to an access station (not shown) where the storage containers 106 can be accessed from outside of the framework structure 100 or transferred out of or into the framework structure 100. Within the art, such a location is normally referred to as a 'port' and the column in which the port is located may be referred to as a `port column' 119,120. The transportation to the access station may be in any direction, that is horizontal, tilted and/or vertical. For example, the storage containers 106 may be placed in a random or dedicated column 105 within the framework structure 100, then picked up by any container handling vehicle and transported to a port column 119,120 for further transportation to an access station. The transportation from the port to the access station may require movement along various different directions, by means such as delivery vehicles, trolleys or other transportation lines. Note that the term 'tilted' means transportation of storage containers 106 having a general transportation orientation somewhere between horizontal and vertical.

In Fig. 1, the first port column 119 may for example be a dedicated drop-off port column where the container handling vehicles 201,301,401 can drop off storage containers 106 to be transported to an access or a transfer station, and the second port column 120 may be a dedicated pick-up port column where the container handling vehicles 201,301,401 can pick up storage containers 106 that have been transported from an access or a transfer station.

The access station may typically be a picking or a stocking station where product items are removed from or positioned into the storage containers 106. In a picking or a stocking station, the storage containers 106 are normally not removed from the automated storage and retrieval system 1, but are returned into the framework structure 100 again once accessed. A port can also be used for transferring storage containers to another storage facility (e.g. to another framework structure or to another automated storage and retrieval system), to a transport vehicle (e.g. a train or a lorry), or to a production facility.

A conveyor system comprising conveyors is normally employed to transport the storage containers between the port columns 119,120 and the access station.

If the port columns 119,120 and the access station are located at different levels, the conveyor system may comprise a lift device with a vertical component for transporting the storage containers 106 vertically between the port column 119,120 and the access station.

The conveyor system may be arranged to transfer storage containers 106 between different framework structures, e.g. as is described in WO2014/075937A1, the contents of which are incorporated herein by reference.

A storage system may also use port columns 119,120 to transfer a storage container between the rail system 108 on top of the framework structure 100 and a container transfer vehicle arranged below a lower end of the port column. Such storage systems and suitable container transfer vehicles are disclosed in WO 2019/238694 A1 and WO 2019/238697 A1, the contents of which are incorporated herein by reference.

A potential disadvantage of using a container transfer vehicle to retrieve and deliver storage containers from/to the lower end of a port column is the time dependency between the container transfer vehicle(s) and the container handling vehicles used to retrieve/deliver the storage containers through the port column.

When a storage container 106 stored in one of the columns 105 disclosed in Fig. 1 is to be accessed, one of the container handling vehicles 201,301,401 is instructed to retrieve the target storage container 106 from its position and transport it to the drop-off port column 119. This operation involves moving the container handling vehicle 201,301,401 to a location above the storage column 105 in which the target storage container 106 is positioned, retrieving the storage container 106 from the storage column 105 using the container handling vehicle's 201,301,401 lifting device (not shown), and transporting the storage container 106 to the drop-off port column 119. If the target storage container 106 is located deep within a stack 107, i.e. with one or a plurality of other storage containers 106 positioned above the target storage container 106, the operation also involves temporarily moving the above-positioned storage containers prior to lifting the target storage container 106 from the storage column 105. This step, which is sometimes referred to as "digging" within the art, may be performed with the same container handling vehicle that is subsequently used for transporting the target storage container to the drop-off port column 119, or with one or a plurality of other cooperating container handling vehicles. Alternatively, or in addition, the automated storage and retrieval system 1 may have container handling vehicles 201,301,401 specifically dedicated to the task of temporarily removing storage containers 106 from a storage column 105. Once the target storage container 106 has been removed from the storage column 105, the temporarily removed storage containers 106 can be repositioned into the original storage column 105. However, the removed storage containers 106 may alternatively be relocated to other storage columns 105.

When a storage container 106 is to be stored in one of the columns 105, one of the container handling vehicles 201,301,401 is instructed to pick up the storage container 106 from the pick-up port column 120 and transport it to a location above the storage column 105 where it is to be stored. After any storage containers 106 positioned at or above the target position within the stack 107 have been removed, the container handling vehicle 201,301,401 positions the storage container 106 at the desired position. The removed storage containers 106 may then be lowered back into the storage column 105, or relocated to other storage columns 105.

For monitoring and controlling the automated storage and retrieval system 1, e.g. monitoring and controlling the location of respective storage containers 106 within the framework structure 100, the content of each storage container 106; and the movement of the container handling vehicles 201,301,401 so that a desired storage container 106 can be delivered to the desired location at the desired time without the container handling vehicles 201,301,401 colliding with each other, the automated storage and retrieval system 1 comprises a control system 500 which typically is computerized and which typically comprises a database for keeping track of the storage containers 106.

WO 2020/074257 A1 (AutoStore AS) relates to an expansion joint which allows relative movement in the longitudinal direction. The longitudinal extension in the thermal expansion joint is between two crossings. When a container handling vehicle enters an X-Y crossing, there are no sidewalls, thus the light is not reflected back to the sensor. This effect can be used to determine the position of a container handling vehicle. If the expander joint has a part without side walls, false signals can result. Software in the vehicle can correct for any such false signal of the rail/track sensor in the container handling vehicles when driving over an expander joint, possibly in connection with measurement of cell size (the size of the cells with expander joints are not fixed as is the case for fixed grid cells). The control system keeps track of all vehicles in the system and knows when the vehicle is about to enter a cell with an expansion joint. When a vehicle enters a cell with an expansion joint, the overall control system may then either ignore the signal representing the false signal at the expansion joint or, turn off the sensor in the vehicle when passing the expansion joint. Alternatively, the risk of such false signals may be reduced by arranging a sliding sidewall at the expansion joint which moves together with the expansion joint or which is of such a size that it covers the expansion joint also in a maximum extended position.

One objective of the invention is to solve at least some of the drawbacks related to prior art solutions.

In particular, it is an objective of the invention to provide an alternative thermal expansion joint which allows longitudinal expansion and contraction of rail system and where the possibility of false readings is greatly reduced or completely eliminated.

### SUMMARY OF THE INVENTION

The present invention is set forth and characterized in the independent claims, while the dependent claims describe other characteristics of the invention.

The invention provides a crossing for a grid-based rail system of an automated storage and retrieval system, wherein the crossing comprises a first rail extending in a first direction X and a second rail extending in a second direction Y which is perpendicular to the first direction X, wherein the first and second rails each comprise at least one track for guiding wheels of a container handling vehicle in a longitudinal direction of said rail, the first and second rails engaging one another to form the crossing where the at least one track of the first rail crosses a path of the at least one track of the second rail, the crossing being configured to be supported by an upright member from below, and wherein at least one of the first and second rails is provided as a pair of rail sections arranged in an end-to-end manner in the longitudinal direction of said rail, the ends of the rail sections meeting in a central portion of the crossing, and the rail sections being configured to permit a range of movement of one end relative to the other in the longitudinal direction of the said rail so as to provide a thermal expansion joint for the said rail that is arranged within a volume of the crossing defined by the engagement of the first and second rails.

In embodiments, both the first and the second rails may be provided as a pair of rail sections arranged in an end-to-end manner in the longitudinal direction of said rail, the ends of the rail sections meeting in a central portion of the crossing and the rail sections being configured to permit a range of movement of one end relative to the other in the longitudinal direction of the said rail. In this way, the crossing can provide a thermal expansion joint for both the first and the second rails within the volume of the crossing defined by the engagement of the first and second rails.

The profiles of the crossing may be arranged to form one or more expansion gaps as the rails contract and expand the expansion j oint, these expansion gaps being located within the crossing defined by the engagement of the first and second rails.

The range of movement for the end of one or both rail section(s) may vary from a few millimeters and up to a few centimeters, e.g. from 1 millimeter to 5 centimeter. The range of movement depends on the expected temperature variations and thus expansion and contraction of the rails.

Rail sensors in the container handling vehicles normally emit light to a side of the vehicle that is reflected back by a sidewall of a rail. When a container handling vehicle enters an XY crossing, there are no sidewalls, thus the light is not reflected back to the sensor. When the thermal expansion joint expands and contracts, as the longitudinal expansion and/or retraction of the parts of the thermal expansion joint takes place within the crossings, it reduces the risk of false readings because the vehicle with its sensor(s) for recognizing crossings is already not expecting to receive a reflection of the light when passing a crossing. Thus the missing light reflection of the crossing and the thermal expansion joint overlap.

At least a majority of, if not all, of the longitudinal expansion and retraction of the thermal expansion joint is within the volume defined by the engagement of the first and second rails.

If the crossing is for longitudinal expansion and contraction in one direction only, i.e. either in the first direction X or in the second direction Y, the volume of the engagement of the first and second rails defines the maximum allowable movement for the thermal expansion joint during expansion in said one direction (e.g. as a result of thermal contraction of the rails running in the direction of contraction).

However, if the crossing allows for longitudinal expansion and contraction in both the first and second directions X,Y, the volume of the engagement of the first and second rails defines the maximum allowable movement for the thermal expansion joint during expansion in both of said directions (e.g. as a result of thermal contraction of the rails running in both of the directions of contraction).

At least one of the rail sections of the said rail may comprise a cutout on a lower portion thereof, wherein the cutout extends in a longitudinal direction of the rail section for receiving an upper edge of the upright member such that the rail section can move in a longitudinal direction relative the upper edge of the upright member.

There may be arranged cutouts on both or only one side of the crossing. The cutouts are of such a size that the upper edge of the upright member can move "freely" therein, thus avoiding a risk that the upright member could be bent upon expansion or contraction of a rail connected to the upper edge of the upright member. In prior art crossings, the cutouts are smaller such that the upper edge of the upright member and the cutout form a tight fit therebetween with no room for relative movement of the rail section compared to the upright member.

The thermal expansion joint may be arranged to form a continuous surface for the wheels of the container handling vehicle. Preferably at least 50% of the wheel width is in contact with the track at any time. This can be achieved by splitting the tracks of two opposing rail sections into two halves in the longitudinal direction and allow the two halves to slide relative each other, thereby ensuring that there is always support for the wheels and no rail where the whole track is missing.

The first rail or the second rail may comprise one track or two parallel tracks.

The crossing may comprise:
- an X top profile extending in the first direction;
- an X bottom profile extending in the first direction X, wherein the X top profile is configured to be connected to the X bottom profile; and
- a Y profile extending in the second direction Y.

Thus, one of the pair of rail sections may comprise the X top profile extending in the first direction X and the X bottom profile extending in the first direction X. The other of the pair of rail sections may also comprise a X top profile extending in the first direction X and a X bottom profile extending in the first direction X.

The profiles of the first and second direction X,Y may define a hollow where the tracks of the rails cross one another. The crossing may be provided with a horizontal member, or a set of horizontal members, that can slide with respect to at least one of the rail sections in the hollow as the thermal expansion joint expands and contracts. The horizontal member(s) may have an upper surface which provides a continuation of a rolling surface of the tracks across the thermal expansion joint. A lower surface of the horizontal member(s) may be arranged to slide on a surface of the hollow between the rail sections or on another of the horizontal members during expansion and contraction of the rail(s). Expansion gaps may form on opposite sides of the horizontal member as the rail contracts and the expansion joint expands, or on only one side, depending on whether the horizontal member is tethered to one of the rail sections.

The continuation of the rolling surface of a track may be provided by a single horizontal member comprising a splice piece (e.g., as described below with respect to a first embodiment), a pair of connection pieces (e.g., as described below with respect to a second embodiment), through a splice piece cooperating with one or more cradle pieces (e.g., as described below with respect to a third embodiment), or through some other arrangement that achieves the same effect of maintaining a smooth rolling surface for a wheel of a container handling vehicle.

In accordance with a first embodiment, the thermal expansion joint comprises a splice piece having two first portions of a first thickness and one second portion with a second thickness, wherein the second thickness is larger than the first thickness.

Further in accordance with the first embodiment, one of the first portions is arranged on one side of the second portion and the other first portion is arranged on the other side of the second portion, and wherein the X top profile comprises a groove for accommodating one of the first portions of the splice piece.

Further in accordance with the first embodiment, the X top profile comprises two lip portions and an opening in between the two lip portions, wherein the opening is formed in an extension of the groove and is configured to receive one of the first portions and a part of the second portion of the splice piece, and wherein, when the first portion of the splice piece is positioned in the groove, an upper surface of the second portion is flush with a rolling surface of the track of a rail of the first rail.

Further in accordance with the first embodiment, the X bottom profile comprises an upper end face and a lower end face, and wherein a receiving space formed between two opposing upper end faces of the X bottom profile is larger than a volume occupied by a perpendicular Y profile extending in the second direction such that at least one of the X bottom profiles can move in the first direction relative to a side surface of the perpendicular Y profile.

Further in accordance with the first embodiment, when the thermal expansion joint has expanded, there is formed a gap between the two opposing X bottom profiles of the crossing.

Further in accordance with the first embodiment, the X bottom profile comprises a hollow portion and wherein the crossing comprises a reinforcement bar having a first end and a second end, and wherein the first end is connectable within the hollow portion and the second end of the reinforcement bar extends out of the hollow portion and is configured to extend into a hollow portion of an opposing X bottom profile.

In order for the expansion and retraction of rails in the first direction X to be possible, the second end of the reinforcement bar is not secured to the hollow portion of the opposing X bottom profile but rather arranged to slide inside the hollow portion of the opposing X bottom profile.

According to a second embodiment, the thermal expansion joint comprises a connection piece for mating with an identical connection piece oriented in an opposite direction. The connection piece may have fingers for mating with fingers of the identical connection piece.

Further according to the second embodiment, the connection piece has an F-shape and is formed by a first element oriented perpendicular to the second rail, and by a second element and a third element connected to the first element and oriented parallel to the second rail.

Further according to the second embodiment, a thickness of the connection piece is chosen such that, when connected, a top surface of the connection piece is flush with a rolling surface of the track of a rail of the second rail.

Further according to the second embodiment, the Y profile comprises an upper end face, an intermediate end face and a lower end face, and wherein an upper receiving space is formed between two opposing Y profiles and wherein the connection piece is configured to be received in the upper receiving space.

Further according to the second embodiment, an upper end of the lower end face comprises a recess with a larger extent in the second direction than width in the second direction of a protruding rim of the X bottom profile, such that when the protruding rim is positioned within the recess, the Y profile can move relative the protruding rim. This results in that the Y profile according to the second embodiment of the invention can move relative the perpendicular X bottom profile.

Further according to the second embodiment, a lower receiving space formed between two opposing lower end faces of the Y profile is larger than a volume occupied by a perpendicular X bottom profile extending in the first direction X such that at least one of the Y bottom profiles can move in the second direction Y relative to a side surface of the perpendicular X bottom profile.

Further according to the second embodiment, the Y profile comprises a hollow portion and wherein the crossing comprises a reinforcement bar having a first end and a second end, and wherein the first end is connectable within the hollow portion and the second end of the reinforcement bar extends out of the hollow portion and is configured to extend into a hollow portion of an opposing Y profile.

According to a third embodiment, the thermal expansion joint allows for longitudinal expansion and contraction of both the first rail in the first direction X and the second rail in the second direction Y.

In the third embodiment of the invention, the range of movement of one end of a rail section relative to the other in the longitudinal direction of the said first or second rail may correspond to less than a width of half a track so that the wheels of the container handling vehicle on either of the two tracks can pass over the crossing.

Further according to the third embodiment, the thermal expansion joint comprises a splice piece having a first portion of a first thickness and a second portion of the same first thickness, and an intermediate portion with a second thickness arranged between the first and second portions.

Further according to the third embodiment, the X top profile comprises a groove for receiving the first portion of the splice piece such that the first portion can be accommodated in the groove.

Further according to the third embodiment, the second portion is smaller than the groove of the X top profile such that the second portion can be accommodated in the groove.

Further according to the third embodiment, the first portion comprises connection portions complementary shaped as connection holes of the X top profile such that the splice piece can be secured to the X top profile.

Further according to the third embodiment, the second thickness of the intermediate portion is selected such that an upper surface of the intermediate portion is flush with a rolling surface of the track of a rail of the first rail of the X top profiles when the first portion of the splice piece is positioned in the groove of the X top profile.

Further according to the third embodiment, the second portion of the splice piece is formed as a lip.

Further according to the third embodiment, the intermediate portion of the splice piece is formed as a cross with two protruding members which extend perpendicular relative a longitudinal direction of the splice piece.

Further according to the third embodiment, the two protruding members have a thickness equal to the first thickness while the remaining part of the intermediate section is of the second thickness.

Further according to the third embodiment, the thermal expansion joint features two cradle pieces, wherein the cradle pieces feature connection holes for connection to complementary holes of an underlying Y profile.

Further according to the third embodiment, the cradle pieces feature a first portion having the second thickness and a second portion having the second thickness, and an intermediate portion of the first thickness.

Further according to the third embodiment, the intermediate portion is shaped such that the protruding member of the splice piece is allowed to slide therein upon expansion and retraction of the first rail or the second rail.

It is further described a storage system comprising a framework structure, the framework structure comprising upright members and a two-dimensional rail system arranged across the top of the upright members, the rail system comprises a first set of parallel rails arranged to guide movement of container handling vehicles in a first direction X across the top of the frame structure, and a second set of parallel rails arranged perpendicular to the first set of rails to guide movement of the container handling vehicles in a second direction Y which is perpendicular to the first direction, the first and second sets of parallel rails dividing the rail system into a plurality of access openings in the rail system for lifting and lowering of a storage container between a position above the rail system and a position below the rail system, and wherein the storage system comprises at least one crossing as defined above arranged along each rail of the of first or second set of parallel rails forming a continuous track from one end of the rail system to an opposite end of the rail system.

A set of parallel rails comprises two rails in the same direction with a distance therebetween. Thus, in order to be able to provide for the thermal expansion, both of the rails in the set of parallel rails has at least one crossing each.

The above described crossings may be interspersed though the two-dimensional rail system (grid-based rail system), for example, every 2, 3, 4, 5 or other number of conventional crossings without a thermal expansion joint. Depending on the proportions of the spaces in the framework structure, the above described crossings may be provided more frequently at the crossings in one direction compared to the other direction.

The crossing may be arranged to lie within a vertical proj ection of a hollow center section of an upright member when supported by the upright members.

It is further described a method of providing a crossing in a grid-based rail system of an automated storage and retrieval system, the crossing allowing for thermal expansion and contraction of rails extending through the crossing; the method comprises:
- positioning a pair of rail sections of a first rail extending in a first direction and a second rail extending in a second direction on an underlying supporting upright member, wherein the second direction is perpendicular to the first direction and wherein the first and second rails each comprise at least one track for guiding wheels of a container handling vehicle in a longitudinal direction of said rail;
- wherein the first and second rails engage to form the crossing where at least one track of the first rail crosses a path of the at least one track of the second rail, the rail sections being arranged in an end-to-end manner in a longitudinal direction of a rail and the ends of the rail sections meeting in a central portion of the crossing to permit a range of movement of one end relative to the other in the longitudinal direction of the first or second rail, thereby providing a thermal expansion joint for the first or second rail that is arranged within the crossing within a volume defined by the engagement of the first and second rails.

The method may comprise connecting crossings as defined above to rails of a first set of parallel rails extending in the first direction or rails of a second set of parallel rails extending in the second direction such as to allow for thermal expansion and contraction of the first or second set of parallel rails. The thermal expansion joint according to the three embodiments of the invention may be made as standard pieces in a factory or custom made at the location of the storage system.

The crossings according to the three described embodiments are preferably connectable to the prior art first and second set of parallel rails. There may be one or more crossings along one length of rail, dependent on the expected temperature variations and thus expansion and contraction of the rails. Therefore, one length of rail, i.e. one rail extending from one end of the rail system to the other end of the rail system typically comprises a plurality of standard prior art crossings and one or more of the crossings according to the three described embodiments.

In the present specification the term "storage container" is intended to mean any goods holder unit having a bottom plate and side portions suitable for releasable connection to the container lift device, e.g. a bin, a tote, a tray or similar. The side portions may preferably comprise gripping recesses. The side portions are preferably sidewalls. The height of the sidewalls may vary depending on the intended use of the storage system and the goods to be stored. The gripping recesses may be arranged at an upper rim of the sidewalls. The outer horizontal periphery of the storage container is preferably rectangular.

The invention may be used in connection with storage containers and systems as described above. However, other areas where the disclosed storage system and methods may be used is within vertical farming, micro-fulfilment or grocery/e-grocery.

### BRIEF DESCRIPTION OF THE DRAWINGS

Following drawings are appended to facilitate the understanding of the invention. The drawings show embodiments of the invention, which will now be described by way of example only, where:
Fig. 1 is a perspective view of a framework structure of a prior art automated storage and retrieval system;
Fig. 2 is a perspective view of a prior art container handling vehicle having an internally arranged cavity for carrying storage containers therein;
Fig. 3 is a perspective view of a prior art container handling vehicle having a cantilever for carrying storage containers underneath;
Fig. 4 is a perspective view, seen from below, of a prior art container handling vehicle having an internally arranged cavity for carrying storage containers therein;
Fig. 5A is a side perspective view of part of a prior art rail system with a crossing between a first set of parallel rails comprising X top profiles and X bottom profiles, wherein the first set of parallel rails extends in a first direction X, and a second set of parallel rails comprising Y profiles and extending in a second direction Y, wherein the second set of parallel rails extends in a second direction which is perpendicular to the first direction, and wherein the rail system is supported on top of an upright member at the crossing;
Fig. 5B is a top view of the cross section of a prior art upright member;
Fig. 6A shows a prior art rail of a first set of parallel rails comprising X top profiles and X bottom profiles extending in a first direction X;
Fig. 6B shows details of a connection between two prior art X top profiles;
Fig. 6C shows details of a connection between two prior art X bottom profiles;
Fig. 7A shows details of one prior art X top profile;
Fig. 7B shows details of a rail section of a first rail extending in the first direction X comprising a X top profile according to a first embodiment of the invention;
Fig. 7C shows details of a splice piece to be used together with the X top profile of Fig. 7B according to the first embodiment of the invention;
Fig. 7D is a side view of Fig. 7C;
Fig. 8A shows details of one prior art X bottom profile;
Fig. 8B shows details of a X bottom profile according to the first embodiment of the invention;
Fig. 8C illustrates differences between the prior art X bottom profile and the X bottom profile according to the first embodiment of the invention, where the dotted lines indicate differences of the X bottom profile according to the first embodiment of the invention and the solid lines indicate the prior art X bottom profile;
Fig. 9A shows details of the first rail comprising the X top profiles and the X bottom profiles according to the first embodiment of the invention, where the thermal expansion joint has contracted in the X direction;
Fig. 9B shows details of the X top profiles in Fig. 9A where the X bottom profiles, the Y profile and the upright member have been removed for illustrative purposes;
Fig. 9C shows details of the X bottom profiles in Fig. 9A where the X top profiles, the Y profile and the upright member have been removed for illustrative purposes;
Fig. 10A shows details of the first rail comprising the X top profiles and the X bottom profiles according to the first embodiment of the invention, where the thermal expansion joint has expanded in the first direction X of the first rail;
Fig. 10B shows details of the X top profiles in Fig. 10A where the X bottom profile, the Y profile and the upright member have been removed for illustrative purposes;
Fig. 10C shows details of the X bottom profiles in Fig. 10A where the X top profiles, Y profile and the upright member have been removed for illustrative purposes;
Fig. 11A is a side perspective view of the prior art rail system in Fig. 5A where the rail system has been rotated 90 degrees;
Fig. 11B shows details of a connection between two prior art Y profiles;
Fig. 12A is a similar view as Fig. 7A showing details of one prior art X top profile;
Fig. 12B shows details of a X top profile according to a second embodiment of the invention;
Fig. 13A shows details of one prior art Y profile;
Fig. 13B shows details of a Y profile according to the second embodiment of the invention;
Fig. 13C shows details of a connection piece to be connected to the Y profile according to the second embodiment of the invention;
Fig. 13D is a top view of the connection piece in Fig. 13C;
Fig. 13E illustrates the physical differences of the prior art Y profile and the Y profile according to the second embodiment of the invention, where the dotted lines indicate the Y profile according to the second embodiment of the invention and the solid lines indicate the prior art Y profile;
Fig. 14A shows details of a crossing of the second rail comprising a Y profile according to the second embodiment of the invention and one prior art Y profile, where the thermal expansion joint has contracted in the second direction of the second rail;
Fig. 14B shows details of the Y profile in Fig. 14A where the upright member has been removed for illustrative purposes;
Fig. 15A details of a crossing of the second rail comprising a Y profile according to the second embodiment of the invention and one prior art Y profile, where the thermal expansion joint has expanded in the second direction of the second rail;
Fig. 15B shows details of the Y profiles in Fig. 15A where the upright member has been removed for illustrative purposes;
Fig. 15C is a side view of Fig. 15A;
Fig. 15D is a side view of Fig. 14A;
Fig. 16A is a side perspective view of a X top profile according to a third embodiment of the invention;
Fig. 16B shows a third embodiment of the invention, and is an exploded view of the components forming part of the thermal expansion joint, where the thermal expansion joint permits longitudinal extension in both a first direction X and a second direction Y;
Fig. 16C is a side view of a connection piece of the thermal expansion joint in Fig. 16B;
Fig. 16D is a side view of a cradle piece of the thermal expansion joint in Fig. 16B;
Fig. 17A is a top view of the third embodiment of the invention, where the components in Figs. 16A-16D have been connected to respective X top profiles and Y profiles, and where the thermal expansion joint has contracted in both the first direction X and the second direction Y;
Fig. 17B is a similar top view as Fig. 17A where the splice piece has been removed to better illustrate the relative positions of the underlying X bottom profiles and Y profiles when the thermal expansion joint has contracted in both the first direction X and the second direction Y;
Fig. 17C is a top view of the third embodiment of the invention, where the thermal expansion joint has expanded both in the first direction X and in the second direction Y;
Fig. 17D is a similar top view as Fig. 17C where the splice piece has been removed to better illustrate the relative positions of the underlying X bottom profiles and Y profiles when the thermal expansion joint has expanded in both the first direction X and the second direction Y;
Fig. 18A is a top view of the third embodiment of the invention, where the components in Figs. 16A-16D have been connected to respective X top profiles and Y profiles, and where the thermal expansion joint has expanded in the first direction X and contracted in the second direction Y;
Fig. 18B is a similar top view as Fig. 18A where the splice piece has been removed to better illustrate the relative positions of the underlying X bottom profiles and Y profiles when the thermal expansion joint has expanded in the first direction X and contracted in the second direction Y;
Fig. 18C is a side view of Fig. 18A seen along the Y profile to illustrate the expansion of the thermal expansion joint in the first direction X;
Fig. 18D is a side view of Fig. 18A seen along the X bottom profile to illustrate the contraction of the thermal expansion joint in the second direction Y;
Fig. 19A is a top view of the third embodiment of the invention, where the components in Figs. 16A-16D have been connected to respective X top profiles and Y profiles, and where the thermal expansion joint has contracted in the first direction X and expanded in the second direction Y;
Fig. 19B is a similar top view as Fig. 19A where a splice piece has been removed to better illustrate the relative positions of the underlying X bottom profiles and Y profiles when the thermal expansion joint has contracted in the first direction X and expanded in the second direction Y;
Fig. 19C is a side view of Fig. 19A seen along the prior art Y profile to illustrate the contraction of the thermal expansion joint in the first direction X; and
Fig. 19D a side view of Fig. 19A seen along the X bottom profile according to the first embodiment of the invention to illustrate the expansion of the thermal expansion joint in the second direction Y.

### DETAILED DESCRIPTION OF THE INVENTION

In the following, embodiments of the invention will be discussed in more detail with reference to the appended drawings. It should be understood, however, that the drawings are not intended to limit the invention to the subject-matter depicted in the drawings.

A framework structure 100 of the automated storage and retrieval system 1 may be constructed in a similar manner to the prior art framework structure 100 described above in connection with Figs. 1. That is, the framework structure 100 may comprise a number of upright members 102, and comprise a first, upper rail system 108 extending in the X direction and Y direction.

The framework structure 100 may further comprise storage compartments in the form of storage columns 105 provided between the members 102 wherein storage containers 106 may be stackable in stacks 107 within the storage columns 105.

The framework structure 100 can be of any size. In particular, it is understood that the framework structure can be considerably wider and/or longer and/or deeper than disclosed in Fig. 1. For example, the framework structure 100 may have a horizontal extent of more than 700x700 columns and a storage depth of more than twelve containers.

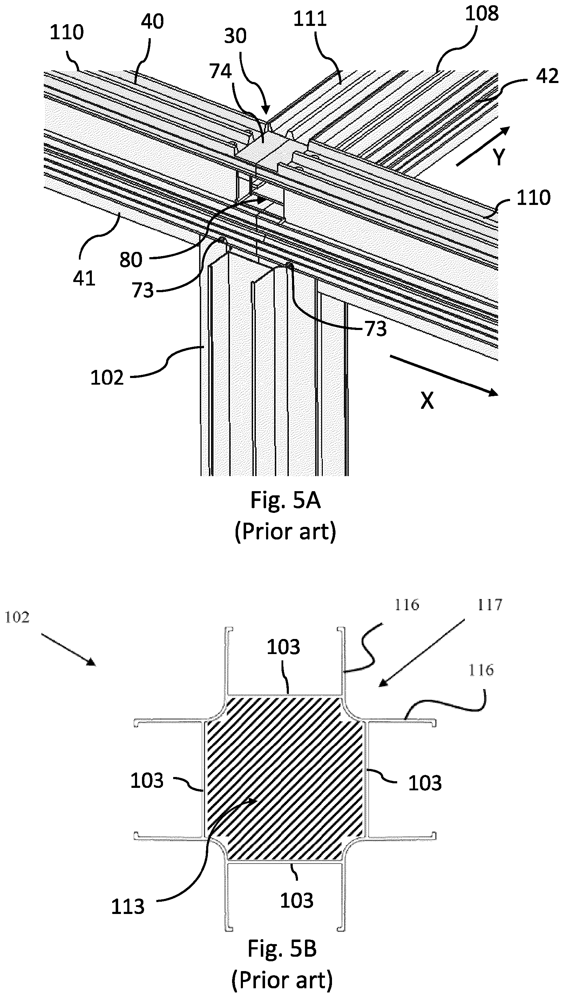

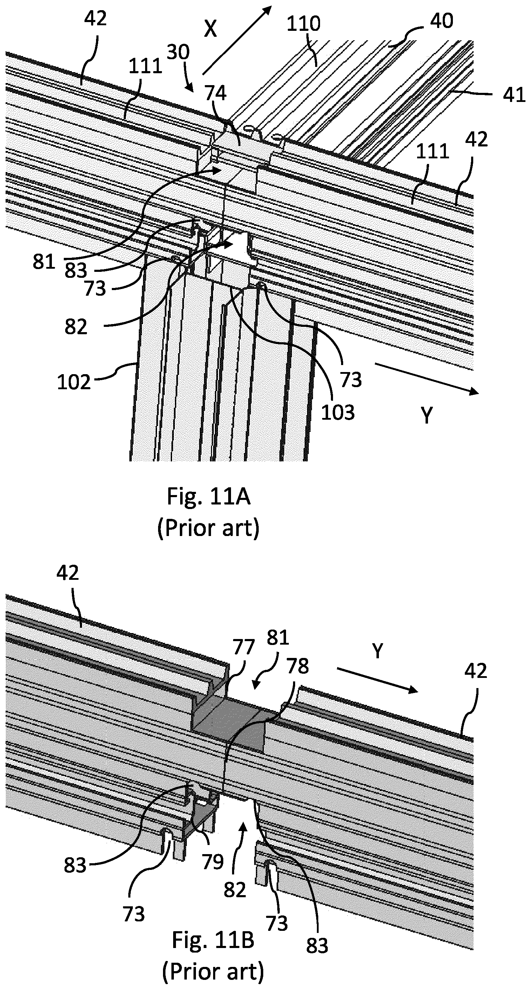

Fig. 5A is a side perspective view of part of a prior art rail system 108 with crossing 30 between a first set of parallel rails 110 comprising X top profiles 40 and X bottom profiles 41, wherein the first set of parallel rails 110 extends in a first direction X, and a second set of parallel rails 111 comprising Y profiles 42, wherein the second set of parallel rails 111 extends in a second direction Y which is perpendicular to the first direction X. The rail system 108 is supported on top of an upright member 102 at the crossing 30. The X bottom profiles 41 each comprise cutouts 73 for receiving an upper edge 103 (just visible in Fig. 5A, but see also Fig. 5B) of the upright member 102 thereby connecting the X bottom profile 41 to the upright member 102. When positioning two X bottom profiles 41 in an end-to-end manner next to each other, a receiving space 80 is formed for accommodating a Y profile 42 which extends in a perpendicular direction therein. The Y profile 42 is provided with a similar receiving space 81 on an underside thereof (not illustrated in Fig. 5A, see details in e.g. Figs. 11A and 11B) for accommodating the X bottom profiles 41. The X top profile 40 is positioned on top of the X bottom profile 41. The connections between the upper edges 103 of the upright member 102 and the cutouts 73 of the X bottom profiles 41, as well as the receiving space 80 of the X bottom profile 41 accommodating the Y profile 42, and lastly the receiving space 81 of the Y profile for accommodating the X bottom profiles 41 secures the upright member 102, the X bottom profiles 41, the Y profile 42 and the X top profiles 40 to each other. The crossing 30 formed by the first set of parallel rails 110 and the second set of parallel rails 111 thus do not provide any flexibility in terms of longitudinal expansion and contraction in any of the first direction X or the second direction Y.

At the crossing 30, the lip portions 74 of the X top profiles 40, are in contact with each other. The lip portions 74 have a flat upper surface such that vehicles (not shown in Fig. 5A, but see Figs. 2, 3 and 4) driving in both the first direction X and the second direction Y can pass over the crossing 30 unhindered.

The crossings according to the three described embodiments are preferably connectable to rails of the prior art first and second set of parallel rails 110,111 and can be integrated within such rail systems, e.g., mixed with the prior art crossings. There may be one or more of the new crossings along one length of rail, dependent on the expected temperature variations and thus expansion and contraction of the rails. Here, length of the rail is referring to the extent of the rail as a whole across the framework structure rather the sections of rail that might make a full rail. The rail may include breaks at unit intervals, expansion joints like those described in WO 2020/074257, or other forms of expansion joint like that described herein, along a given length. Therefore, one length of rail, i.e. one rail extending from one end of the rail system 108 to the other end of the rail system 108 typically comprises a plurality of standard prior art crossings and one or more of the crossings according to, for example, one of the three described embodiments.

Fig. 5B is a top view of the cross section of a prior art upright member 102. The upright member 102 comprises an inwardly facing surface (i.e. the corner 117) in the area of the upright member where the lifting frames are guided. The upright member 102 comprises vertical guide surfaces 116 (or vertical guide plates) for guiding a storage container being moved inside a storage column 105. In a storage column, each of the four upright members 102 provides an inside corner 117 for guiding a corresponding corner of a storage container 106. Typically, each upright member 102 features eight vertical guide surfaces 116 and may thus provide an inside corner 117 of four separate storage columns 112 of the storage grid 104. The upright member 102 comprises a hollow center section 113 (represented by dashed area 113 in Fig. 5B) delimited by the upper edges 103 on four sides of the hollow center section 113.

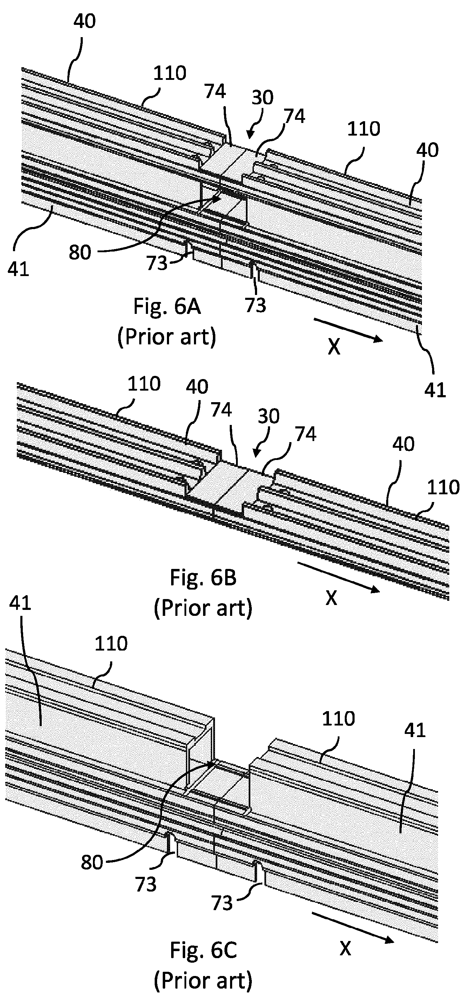

Fig. 6A shows a prior art first set of parallel rails 110 comprising X top profiles 40 and X bottom profiles 41 extending in a first direction X. As seen in the figure, the two X top profiles 40 are arranged in contact with each other (end-to-end contact). Similarly, the two X bottom profiles 41 are also in contact with each other (also end-to-end contact), and a receiving space 80 is formed between the X bottom profiles 41.

Fig. 6B shows details of a connection between two prior art X top profiles 40. The top profile 40 displays two parallel tracks, i.e. so-called double tracks, such that one vehicle having one set of wheels in one of the tracks can pass adjacent another vehicle having one set of wheels in the other track.

Fig. 6C shows details of a connection between two prior art X bottom profiles 41.

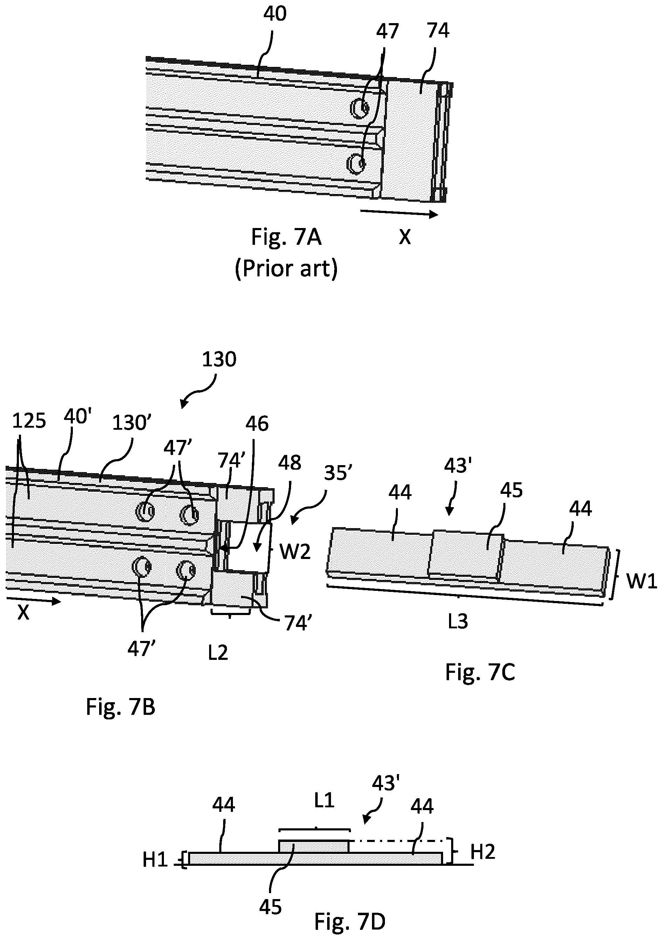

### First embodiment - thermal expansion joint for longitudinal contraction and expansion in first direction X, Figures 7-11

In the first embodiment of the invention, the first rail 130 is provided as a pair of rail sections 130',130" arranged in an end-to-end manner in the longitudinal direction of said first rail 130. Rail section 130' comprises an X top profile 40' according to the first embodiment of the invention and a prior art X bottom profile 41. Rail section 130" on the opposite side of the crossing 30' comprises an X top profile 40' according to the first embodiment of the invention and an X bottom profile 41' according to the first embodiment of the invention.

Fig. 7A shows details of one prior art X top profile 40. The X top profile 40 features a lip 74 which has a size equal to half of the width of a crossing 30 such that when connected to another lip 74 of another prior art X top profile 40, the two lips 74 form the crossing 30.

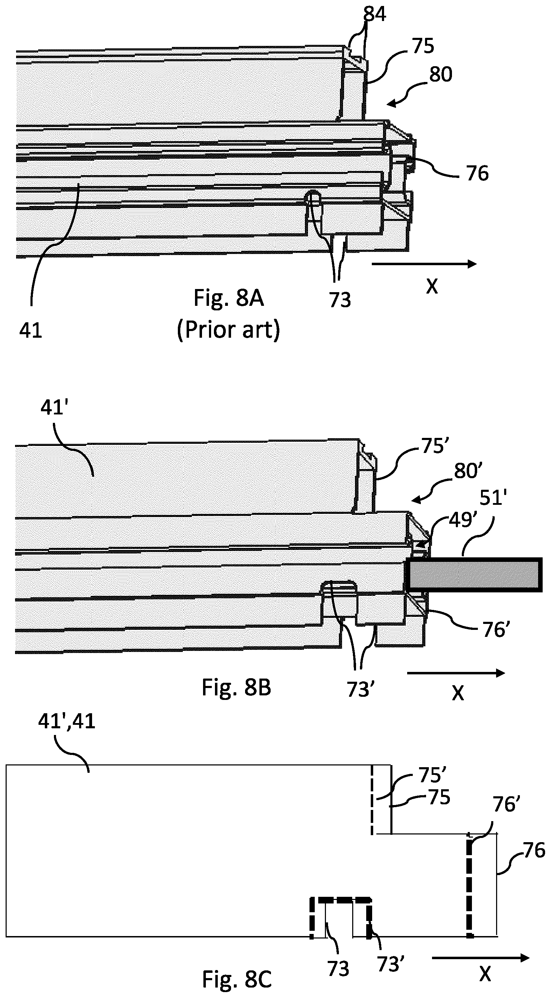

Fig. 7B shows details of rail section 130' of a first rail 130 extending in the first direction X. It is shown a X top profile 40' according to a first embodiment of the invention. The X top profile 40' features a first set of parallel tracks 125 in the first direction X. Further, connection holes 47 are provided in the first set of parallel tracks 125 for connecting the X top profile 40' to an underlying X bottom profile (underlying X bottom profile not shown in Fig. 7B, see e.g. Fig. 8B) by suitable fastening means, such as screws or bolts, which is known to the skilled person. The X top profile 40' further comprises an opening 48 in between two lip portions 74' for receiving a splice piece 43' (see Figs. 7C and 7D). The opening 48 has a width W2 which is equal to or somewhat larger than a width W1 of the splice piece 43'.

Figs. 7C and 7D show details of a splice piece 43' to be used together with the X top profile 40' of Fig 7B according to the first embodiment of the invention. The splice piece 43' features two first portions 44 of a first thickness H1 on opposite sides of a second portion 45 with a greater second thickness H2. The first thickness H1 of the first portions 44 is somewhat smaller than a groove 46 in the X top profile 40' such that the first portions 44 can be accommodated in the grooves 46 of opposing X top profiles 40', respectively. The second thickness H2 of the second portion 45 is selected such that an upper surface of the second portion 45 is flush with a rolling surface of the first set of parallel tracks 125 of the X top profiles 40' when the first portion 44 of the splice piece 43' is positioned in the groove 46 of the X top profile 40'. The opening 48 has a length L2. A length L1 of the second portion 45 may be equal to or somewhat smaller than a total length (L2+L2) of two openings 48, such that two X top profiles 40 can come into contact with each other in the lip portions 74' when the splice piece 43' is positioned therebetween. The splice piece 43', including the first portion 44 and the second portion 45, has the same width W1 along its whole length L3.

When comparing the prior art X top profile 40 in Fig. 7A with the X top profile 40' according to the first embodiment of the invention, the differences being the function of the groove 46 (i.e. to receive the first portion 44 of the splice piece 43'), the opening 48 and the number and positions of the connection holes 47,47' can be seen.

Fig. 8A shows details of one prior art X bottom profile 41. As described above, the prior art X bottom profile comprises cutouts 73 for receiving the upper edge 103 of the upright member 102 (not shown in Fig. 8A, see Fig. 5B). The prior art X bottom profile 41 features an upper end face 75 and a lower end face 76. The lower end face 76 is for contacting an opposing lower end face of another prior art X bottom profile 41 whereas the upper end face 75 is arranged for contacting a side surface of a perpendicular prior art Y profile (not shown in Fig. 8A, see e.g. Fig. 11B) to be arranged in the receiving space 80 formed between two opposing upper end faces 75 of the prior art X bottom profile 41.

Fig. 8B shows details of a X bottom profile 41' according to the first embodiment of the invention. As shown in Fig. 8B, the X bottom profile 41' features cutouts 73' with an increased width compared to the cutouts 73 of the prior art X bottom profile 41 in Fig. 8A. The increased width of the cutouts 73' enables the possibility that the X bottom profile 41' (and the fixedly connected X top profile 40' (see Fig. 7B) can slide relative the upper edge 103 of the upright member 102 and avoids bending of the upright member 102 during expansion and contraction of the rails in the first direction X.

In order for the thermal expansion joint 35' to be able to expand and contract in response to contraction and expansion of the rails in the first direction X, the upper end face 75' and the lower end face 76 are cut/shorter relative to the upper and lower end faces 75,76 in Fig. 8A. This results in the receiving space 80' formed between two opposing upper end faces 75' of the X bottom profile 41' being wider than the receiving space 80 formed between two opposing upper end faces 75 of the prior art X bottom profile 41 in Fig. 8A. When the thermal expansion joint 35' has expanded (e.g., there has been shrinkage in the X direction rails), a perpendicular Y profile arranged in the receiving space 80' will thus not be in contact with at least one of the upper end faces 75' because of the increased distance between the opposing upper end faces 75'.

Similarly, in order for the thermal expansion joint 35' to be able to expand and contract, the lower end face 76' is cut shorter relative to the lower end face 76 in Fig. 8A. Thus, once a perpendicular Y profile is arranged in the receiving space 80', the lower end faces 76' of two opposing X bottom profiles 41' according to the first embodiment are not in contact when the thermal expansion joint 35' has expanded (e.g., when the rails in the X direction have contracted). Furthermore, in order to account for any possible reduced strength in the X bottom profile 41' resulting from the shortening of the X bottom profile 41' by the lower end face 76', a first end of a reinforcement bar 51' can be secured in a hollow portion 49' of one of the X bottom profiles 41' and a second end of the reinforcement bar 51' may extend out from the hollow portion 49' and into a hollow portion 49' (not shown) of an opposing X bottom profile 41,41'. In order for the movement to be possible in the thermal expansion joint, the second end of the reinforcement bar 51' is not secured to the hollow portion of the opposing X bottom profile 41,41' but rather arranged to slide inside the hollow portion of the opposing X bottom profile 41,41'.

Fig. 8C illustrates the differences between the prior art X bottom profile 41 and the X bottom profile 41' according to the first embodiment, where the dotted lines indicate differences of the X bottom profile 41' according to the first embodiment of the invention and the solid lines indicate the prior art X bottom profile 41. The relative positions of the dotted lines and the fully lines are only for illustrative purposes.

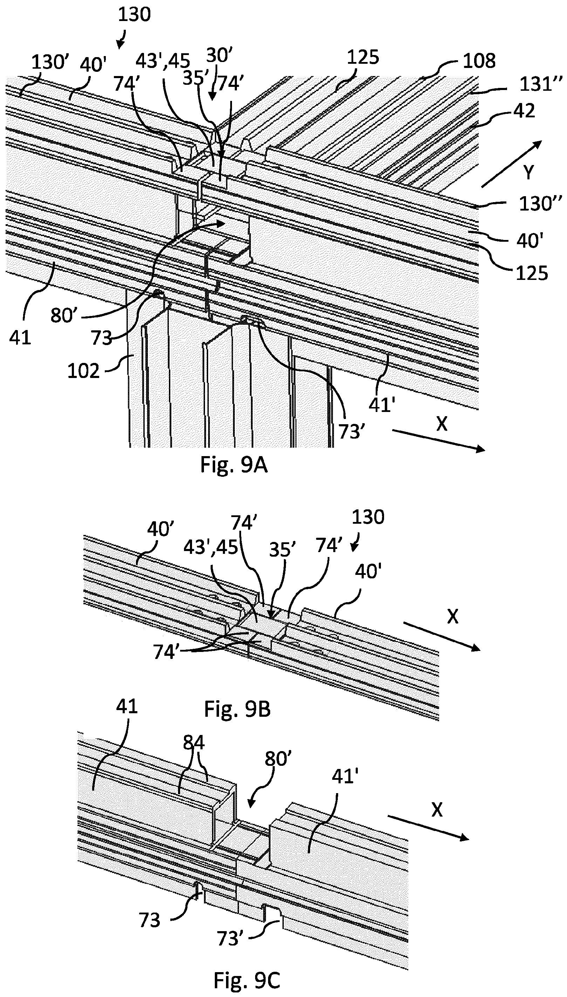

Fig. 9A shows details of the first rail 130 comprising the X top profiles 40' and the X bottom profiles 41',41 according to the first embodiment of the invention, where the thermal expansion joint 35' has contracted in the X direction, for example, as a result of expansion in the first rails 130 in the X direction. As shown in Fig. 9A, the X bottom profile 41' of the rail section 130" on the right-hand side has a cutout 73' which is wider than the cutout 73 of the prior art X bottom profile 41 on the left hand side. The X top profiles 40' are in contact with each other and the prior art X bottom profile 41 and the X bottom profile 41' according to the first embodiment of the invention are in contact with each other. The first portions 44 of the splice piece 43' are accommodated in the grooves 46 of the opposing X top profiles 40' (details of first portions 44 and grooves 46 not shown in Fig, 9A, see e.g. Figs. 7B and 7C).

Fig. 9B shows details of the X top profile in Fig. 9A where the X bottom profiles, the Y profile and the upright member have been removed for illustrative purposes.

Fig. 9C shows details of the X bottom profile in Fig. 9A where the X top profile, the Y profile and the upright member have been removed for illustrative purposes. To the left in Fig. 9C a prior art X bottom profile 41 is shown. This prior art X bottom profile 41 has cutouts 73 of relatively smaller with than the cutouts of the X bottom profile 41' according to the first embodiment of the invention.

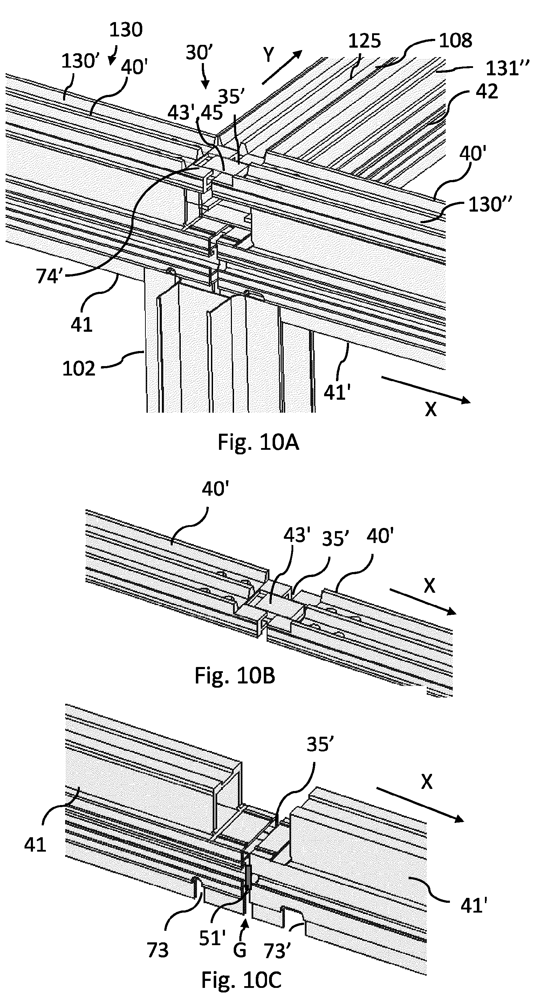

Fig. 10A shows details of the first rails 130 comprising the X top profiles 40' and the X bottom profiles 41',41 according to the first embodiment of the invention, where the thermal expansion joint 35' has expanded in the first direction X of the first rails (in the first direction X) for example as a result of contraction of the rails in the first direction X.

Fig. 10B shows details of the X top profiles 40' in Fig. 10A where the X bottom profiles, the Y profile and the upright member have been removed for illustrative purposes.

Fig. 10C shows details of the X bottom profiles 41',41 in Fig. 10A where the X top profiles, Y profile and the upright member have been removed for illustrative purposes. As seen in Fig. 10C, there is a gap G between the X bottom profiles 41',41 illustrating that the thermal expansion joint 35' has expanded (e.g. as compared to Fig. 9C where the X bottom profiles 41',41 are in contact with each other), e.g., as a result of the rails in the X direction contracting.

When comparing the relative positions of the X top profiles 40' and the X bottom profiles 41' in Figs. 9A-9C with the X top profiles 40' and the X bottom profiles 41' in Figs. 10A-10C, it can be seen that the X top profiles 40' and the X bottom profiles 41' have moved further away from each other. All of the required expansion for enabling movement in the rails is taken up by the thermal expansion joint 35' within the crossing 30.

Fig. 11A is a side perspective view of the prior art rail system in Fig. 5A where the rail system has been rotated 90 degrees. Fig. 11A better illustrates the prior art Y profiles of the rail system.

Fig. 11B shows details of a connection between two prior art Y profiles 42 of Fig. 11A where the prior art X top profile 40, the prior art X bottom profile 41 and the upright member 102 have been removed for illustrative purposes. Similar to the prior art X bottom profiles 41 (see e.g. Fig 8A), the prior art Y profiles comprise cutouts 73 for receiving the upper edge 103 of the upright member 102. The prior art Y profile 42 features an upper end face 77, an intermediate end face 78 and a lower end face 79.

The upper end face 77 is for contacting a side surface of a perpendicular prior art X top profile 40 (not shown in Fig 11B, see e.g. Figs. 6B or 7A) which is to be arranged in the upper receiving space 81 formed between two opposing upper end faces 77 of the prior art Y profiles 42.

The intermediate end face 78 is for contacting an opposing intermediate end face 78 of another prior art Y profile 42.

The lower end face 79 is for contacting a side surface of a perpendicular prior art X bottom profile 41 (not shown in Fig 11B, see e.g. Figs. 6C or 8A) which is to be arranged in the lower receiving space 82 formed between two opposing lower end faces 79 of the prior art Y profiles 42. At an upper end of the lower end face 79 it is arranged a recess 83 for locking prior art X bottom profile 41.

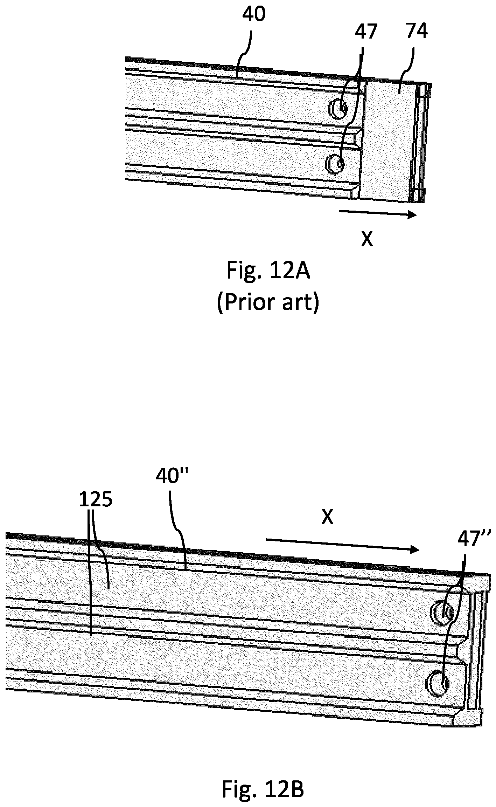

### Second embodiment - thermal expansion joint for longitudinal contraction and expansion in second direction Y, Figures 12 to 15

In the second embodiment of the invention, the second rail 131 is provided as a pair of rail sections 131', 131" arranged in an end-to-end manner in the longitudinal direction of said second rail 131. Rail section 131' comprises a Y profile according to the second embodiment of the invention. Rail section 131" on the opposite side of the crossing 30' comprises a prior art Y profile.

Fig. 12A is a similar view as Fig. 7A showing details of one prior art X top profile 40.

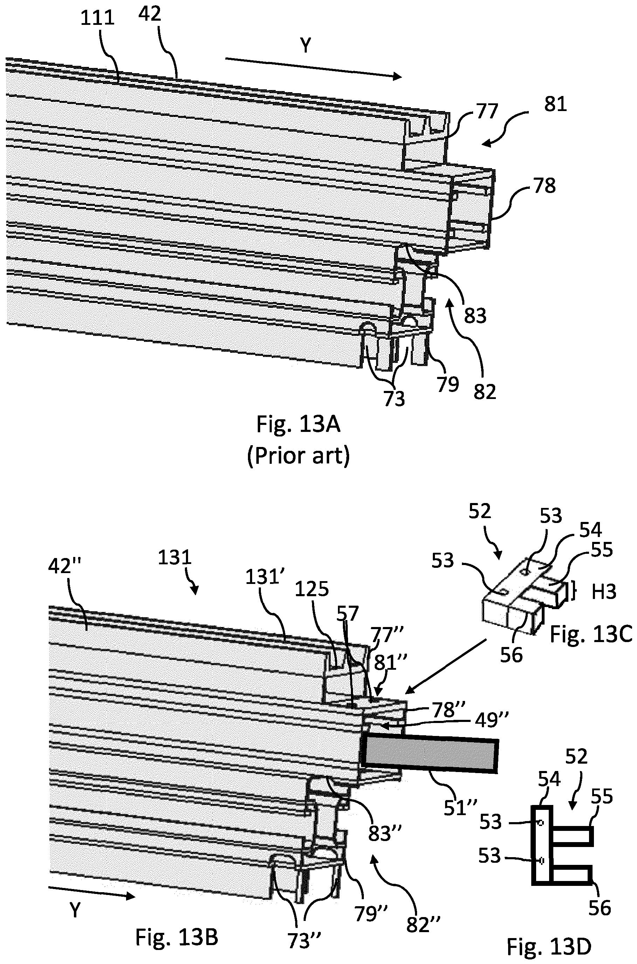

Fig. 12B shows details of a X top profile 40" according to a second embodiment of the invention. The difference between the prior art X top profile 40 in Fig. 12A and the X top profile 40" according to the second embodiment of the invention being that the lip portion 74 in the prior art X top profile 40 does not form part of the X top profile 40" according to the second embodiment of the invention. The X top profile 40" in Fig. 12B also has a pair of parallel tracks 125 as well as connection holes 47" provided in the first rails 130 for connecting the X top profile 40" to an underlying X bottom profile (underlying X bottom profile 41" not shown in Fig. 12B, see e.g. Fig. 13B) by suitable fastening means such as screws or bolts which is known to the skilled person.

Fig. 13A shows details of one prior art Y profile 42. Details of the prior art Y profile 42 in Fig. 13A are the same as described in relation to Fig. 11B except that in Fig. 13A only one prior art Y profile 42 is shown whereas in Fig. 11B two prior art Y profiles 42 are shown. The details of the prior art Y profile 42 will not be repeated herein.

Fig. 13B shows details of a Y profile 42" according to the second embodiment of the invention.

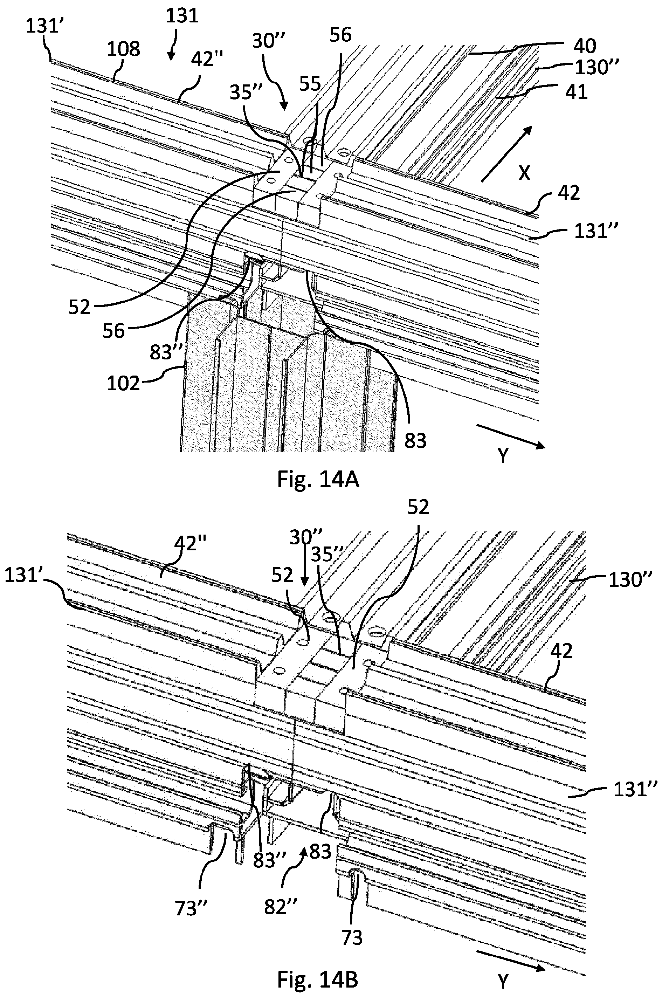

Fig. 13C and 13D show details of a connection piece 52 to be positioned in the upper receiving space 81" of the Y profile and further to be connected to the Y profile 42 according to the second embodiment of the invention. When seen from above, the connection piece 52 has a F-shape for mating with an identical connection piece 52 (not shown in Figs 13B-13D, but see e.g. Fig. 14 A, 14B) oriented in an opposite direction. The connection piece 52 is formed by a first element 54 oriented perpendicular to the second rails 131, as well as a second element 55 and a third element 56 connected to the first element and oriented parallel to the second rails 131. Although the disclosed connection piece 52 is disclosed as being made up of three elements 54,55,56 it is clear that the connection piece can be manufactured from one piece of raw material. The connection piece 52 features fastening holes 53 for connecting the connection piece 52 to complementary shaped holes 57 in the Y profile 42" using suitable fastening means such as screws or bolts which is known to the skilled person. The thickness H3 of the connection piece 52 is chosen such that, when connected, a top surface of the connection piece 52 is flush with a rolling surface of tracks 125 of the second rails 131.

When comparing the Y profile 42" according to the second embodiment of the invention in Figs. 13B, 13C and 13D with the prior art Y profile 42 in Fig. 13A, the main differences are that the distance between the intermediate end face 78" and the upper end face 77" is shorter in the Y profile 42" in Fig. 13B. This can be achieved by cutting the intermediate end face 78". The lower end face 79" has also been cut in order for the Y profile 42" to be able to move relative to a side portion of a X bottom profile (not shown) positioned in the lower receiving space 82 of the Y profile 42". The recess 83" for locking to a protruding rim 84 of a perpendicular X bottom profile (not shown) at an upper end of the lower end face 79" in Fig. 13B is wider than the recess 83 at the upper end of the lower end face 79 in Fig. 13A. This renders possible that the Y profile 42" can move relative to the perpendicular X bottom profile (i.e. the Y profile 42" is not locked to the X bottom profile as is the case in the prior art solution). The cutouts 73" of the second embodiment in Fig. 13B have an increased width compared to the cutouts 73 of the prior art Y profile 42 in Fig. 13A. The increased width of the cutouts 73" enables the possibility that the Y profile 42" can slide relative the upper edge 103 of the upright member 102 and avoids bending of the upright member 102 during expansion and contraction of the thermal expansion joint 35".

A reinforcement bar 51" may be used if required (similar to the X bottom profiles 41' according to the first embodiment of the invention (as described in relation to Fig. 8B). I.e., in order to account for any possible reduced strength in the Y profile 42" resulting from the cut of the lower end face 79", a first end of a reinforcement bar 51" can be secured in a hollow portion 49" of one of the Y profiles 42" and a second end of the reinforcement bar 51" may extend out from the hollow portion 49" and into a hollow portion 49" (not shown) of an opposing Y profile 42,42". In order for the expansion and contraction to be possible, the second end of the reinforcement bar 51" is not secured to the hollow portion of the opposing Y profile 42,42' but rather arranged to slide inside the hollow portion of the opposing Y profile 42,42".

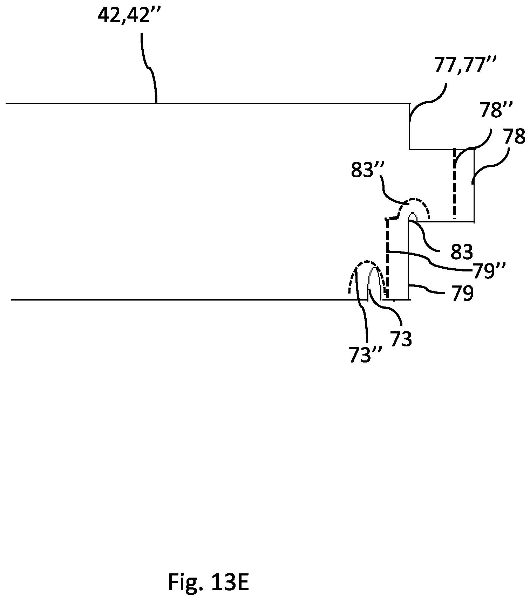

Fig. 13E illustrates the physical differences of the prior art Y profile and the Y profile 42" according to the second embodiment of the invention, where the dotted lines indicate the Y profile 42" according to the second embodiment of the invention and the solid lines indicate the prior art Y profile 42.

Fig. 14A shows details of a crossing 30" of the second rails 131 comprising a Y profile 42" according to the second embodiment of the invention and one prior art Y profile 42, where the thermal expansion joint 35" has contracted in the second direction Y of the second rails 131 e.g. as a result of expansion of the rails in the second direction Y. The crossing 30" is formed between two rail sections 131',131" in the second direction Y, respectively.

Fig. 14B shows details of the Y profiles 42, 42" in Fig. 14A, where the upright member 102 in Fig. 14A has also been removed for illustrative purposes.

Referring to Figs. 14A and 14B, it is seen that the first and second elements 55,56 of the first and second connection pieces 52 fully overlap with each other which indicates that the thermal expansion joint 35" is fully contracted.

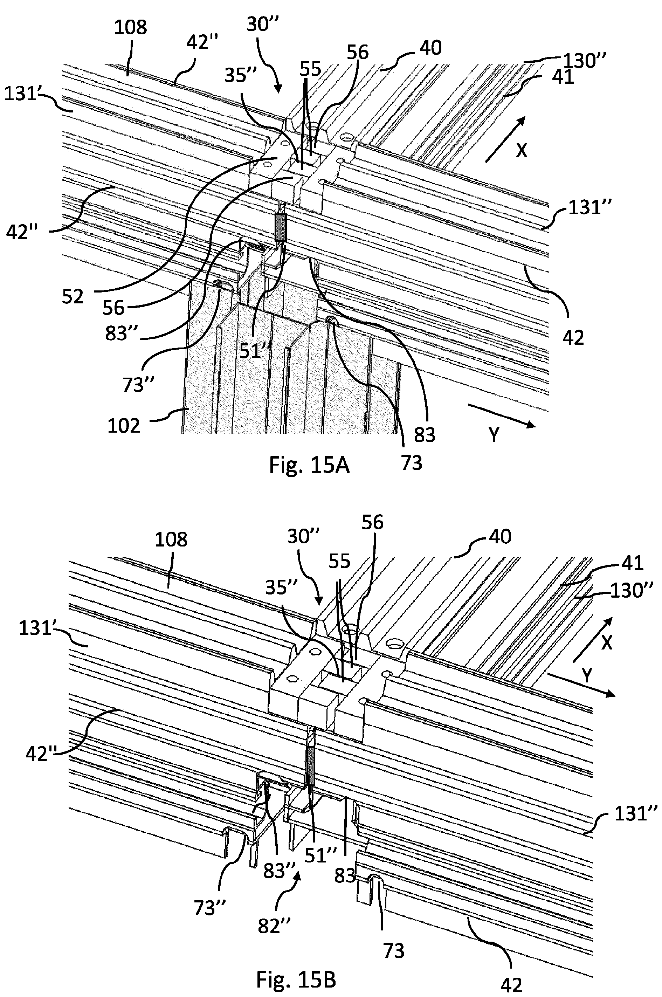

Fig. 15A details of a crossing 30" of the second rails 131 comprising a Y profile 42" according to the second embodiment of the invention and one prior art Y profile 42, where the thermal expansion joint 35" has expanded in the second direction Y of the second rails 131, e.g. as a result of contraction of the rails in the second direction Y.

Fig. 15B shows details of the Y profiles 42, 42" in Fig. 15A where the upright member 102 has also been removed for illustrative purposes. The reinforcement bar 51" is visible in between the Y profiles 42".

Referring to Figs. 15A and 15B, it can be seen that the first and second elements 55,56 of the first and second connection pieces 52, do not fully overlap with each other. When comparing the relative positions of the Y profiles 42" in Figs. 15A and 15B with the Y profiles 42, 42" in Figs. 14A and 14B, it can be clearly seen that the Y profiles 42, 42" have moved further away from each other (i.e. the Y profile 42" according to the second embodiment of the invention have contracted away from the fixed prior art Y profile 42 represented by expansion of the thermal expansion joint 35"). All of the required expansion in the crossing 30" for enabling the contraction of the Y profile 42" according to the second embodiment of the invention is taken up by the thermal expansion joint 35" within the crossing 30.

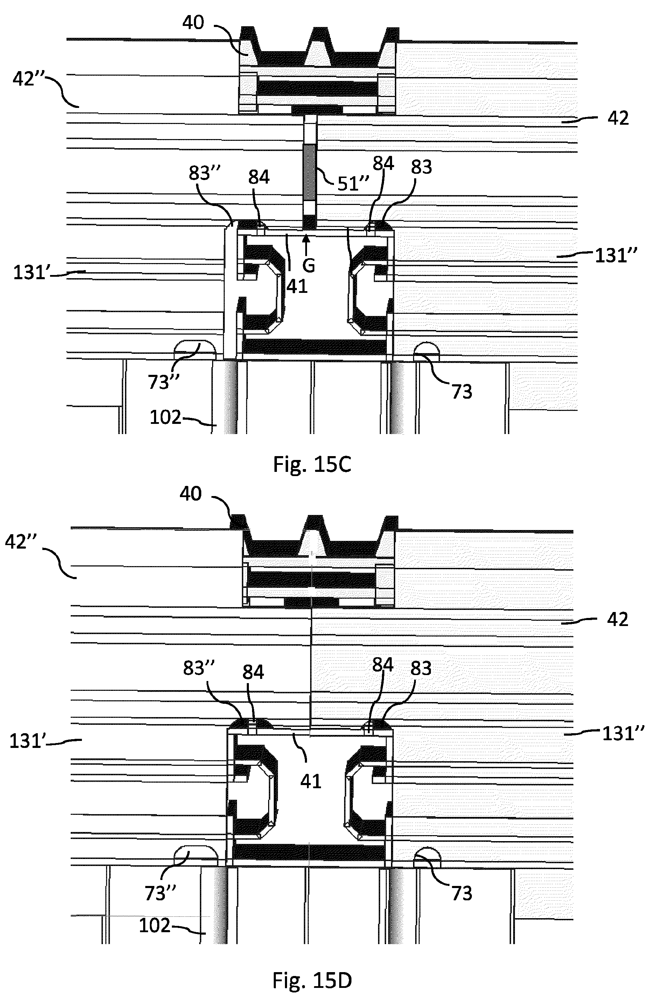

Fig. 15C is a side view of Fig. 15A.

Fig. 15D is a side view of Fig. 14A. When comparing Figs. 15C and 15D, one can clearly see that in Fig. 15C a gap G is formed between the Y profile 42" according to the second embodiment of the invention and the prior art Y profile 42. This gap G is not visible in Fig. 15D. In addition, as a result of that the Y profile 42" according to the second embodiment of the invention has moved to the right (i.e. expanded to the right towards the prior art Y profile 42) the protruding rim 84 of the X bottom profile 41 has moved to the left in Fig. 15D compared to Fig. 15C.

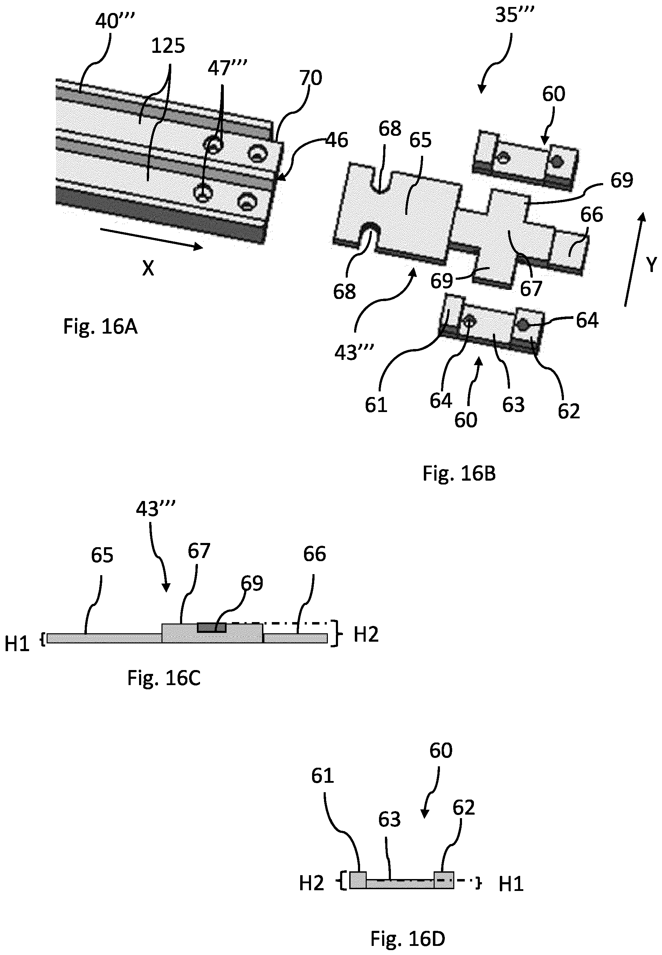

### Third embodiment - thermal expansion joint for longitudinal contraction and expansion in both first direction X and second direction Y, Figures 16-19

In the third embodiment of the invention, the first rail 130 is provided as a pair of rail sections 130',130" arranged in an end-to-end manner in the longitudinal direction of said first rail 130. Rail section 130' of the first rail 130 comprises an X top profile 40‴ according to the third embodiment of the invention and an X bottom profile 41' according to the first embodiment of the invention. Rail section 130" of the first rail 130 on the opposite side of the crossing 30' comprises an X top profile 40" according to the second embodiment of the invention and a prior art X bottom profile 41.

Furthermore, in the third embodiment of the invention, the second rail 131 is provided as a pair of rail sections 131', 131" arranged in an end-to-end manner in the longitudinal direction of said second rail 131. Rail section 131' of the second rail 131 comprises a Y profile 42" according to the second embodiment of the invention. Rail section 131" of the second rail 131 on the opposite side of the crossing 30 comprises a prior art Y profile 42.

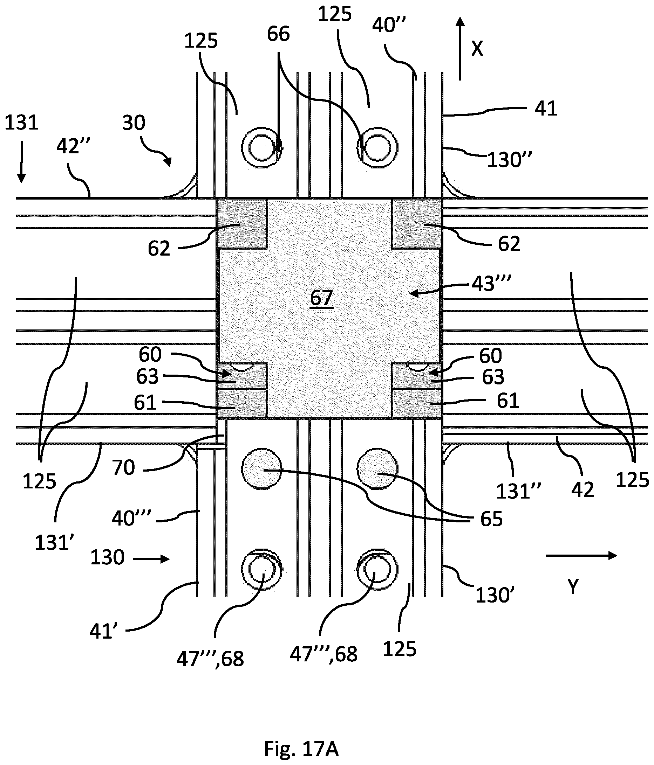

Fig. 16A is a side perspective view of a X top profile 40‴ according to a third embodiment of the invention. As is seen in Fig. 16A, a corner 70 at the end of the X top profile 40‴ closest to the crossing 30 (crossing 30 not shown in Fig. 16A, see e.g. Fig 17A) has been cut or removed in order to make space for a perpendicular Y profile (not shown in Fig. 16A) when the thermal expansion joint 35'" (see Fig. 16B) has contracted.

Fig. 16B shows a third embodiment of the invention, and is an exploded view of the components forming part of the thermal expansion joint 35‴, where the thermal expansion joint 35'" permits longitudinal extension in both a first direction X and a second direction Y.

Fig. 16C is a side view of a splice piece 43‴ of the thermal expansion joint 35'" in Fig. 16B.

Fig. 16D is a side view of a cradle piece 60 of the thermal expansion joint 35'" in Fig. 16B.

Referring to Figs. 16A-16D, the thermal expansion joint 35'" features a splice piece 43'". The splice piece 43‴ features a first portion 65 of a first thickness H1 and a second portion 66 of the same first thickness H1, the first and second portions 65,66 being arranged on opposite sides of an intermediate portion 67 with a greater second thickness H2. The first thickness H1 of the first portion 65 is somewhat smaller than a groove 46 in the X top profile 40‴ such that the first portion 65 can be accommodated in the groove 46. Similarly, the second portion 66 is also somewhat smaller than the groove 46 in the X top profile 40" (not shown in Figs. 16A-16D) such that the second portion 66 can be accommodated in the groove 46. The first portion 65 comprises connection portions 68 complementary shaped as the connection holes 47‴ of the X top profile 40‴ such that the splice piece 43‴ can be secured to the X top profile 40'". The second thickness H2 of the intermediate portion 67 is selected such that an upper surface of the intermediate portion 67 is flush with a rolling surface of the tracks 125 of the first rails 130 of the X top profiles 40‴ when the first portion 65 of the splice piece 43‴ is positioned in the groove 46 of the X top profile 40'". The second portion 66 of the splice piece 43‴ is formed as a lip which can extend into a groove 46 of the X top profile 40" (not shown in Figs. 16A-16D) as discussed above. The intermediate portion 67 of the splice piece 43‴ is formed as a cross with two protruding members 69 extends perpendicular (in the second direction Y in Figs. 16A-16D) relative a longitudinal direction of the splice piece 43'". The two protruding members 69 have a thickness equal to the first thickness H1 while the remaining part of the intermediate portion 67 is of the second thickness H2.

Further referring to Figs. 16A-16D, the thermal expansion joint 35'" features two cradle pieces 60. The cradle pieces 60 feature connection holes 64 for connection to complementary holes 57 of an underlying Y profile 42,42" (Y profile not shown in Figs. 16A-16D, see e.g. Fig. 17A). The cradle piece 60 features a first portion 61 having the second thickness H2 and a second portion 62 having the second thickness H2, and an intermediate portion 63 of the first thickness H1. The intermediate portion 63 is shaped such that the protruding member 69 of the splice piece 43‴ is allowed to slide therein. I.e., a length of the intermediate portion 63 is somewhat larger than the extent of the protruding member 69 in the longitudinal direction (i.e. in the first direction X) of the splice piece 43'".

In the following description of the third embodiment of the invention, some of the X and Y profiles are similar or almost identical to the ones described in relation to prior art, the first embodiment of the invention and the second embodiment of the invention, including:
- the prior art X bottom profile 41,
- the X bottom profile 41' according to the first embodiment of the invention,
- the X top profile 40" according to the second embodiment of the invention,
- the prior art Y profile 42, and
- the Y profile 42" according to the second embodiment of the invention. These profiles will not be described in further detail with reference to the third embodiment as they have already been thoroughly described in relation to the embodiment(s) where they are used.

Fig. 17A is a top view of the third embodiment of the invention, where the components in Figs. 16A-16D have been connected to respective X top profiles 40",40‴ and Y profiles 42,42", and where the thermal expansion joint 35'" has contracted in both the first direction X and the second direction Y. e.g. as a result of expansion of the rails in the first direction X and in the second direction Y.

The first rails 130 comprises rail sections 130',130" in the first direction X extends from below to above the crossing 30, whereas the second rail 131 comprises rail sections 131',131" in the second direction Y extending from left to right-hand side of the crossing 30.

The rail section 130' below the crossing 30 is supported on a X bottom profile 41' similar to the X bottom profile 41' according to the first embodiment of the invention and X top profile 40‴ according to a third embodiment of the invention where a corner 70 at the end of the X top profile 40‴ closest to the crossing 30 has been cut or removed in order to make space for a perpendicular Y profile 42". The splice piece 43‴ is connected to the X top profile 40‴ (and connected to the X bottom profile 41') of the rail section 130'. The X bottom profile 41', the X top profile 40‴ and the splice piece 43‴ of rail section 130' are configured to move relative the opposing rail section 130" on the opposite side of the crossing 30 (similar to the function in the first embodiment of the invention).

The rail section 130" above the crossing 30 is supported on a prior art X bottom profile 41 and a X top profile 40" similar to the X top profile 40" according to the second embodiment of the invention where the lip portion has been cut off such that the X top profile 40" does not extend into the crossing 30. The prior art X bottom profile 41 and X top profile 40" are stationary, but the X top profile 40" allows the second portion 66 of the splice piece to move within the groove 46 (not shown).

The rail section 131' on the left-hand side of the crossing 30 is supported on a Y profile 42" similar to the Y profile 42" according to the second embodiment of the invention. One of the cradle pieces 60 is connected to the Y profile 42". The Y profile 42" is configured to move relative the opposing second set of rails 111 on the opposite side of the crossing 30 (similar to the function in the second embodiment of the invention).

The rail section 131" on the right-hand side of the crossing 30 is supported on a prior art Y profile 42. One of the cradle pieces 60 is connected to the Y profile 42. The prior art Y profile 42 is stationary and does not move.

Summarized, the rail section 130' below the crossing 30 and the rail section 131' on the left-hand side of the crossing 30 are allowed to move, whereas the rail section 130" above the crossing 30 and the rail section 131" on the right-hand side of the crossing 30 are stationary.

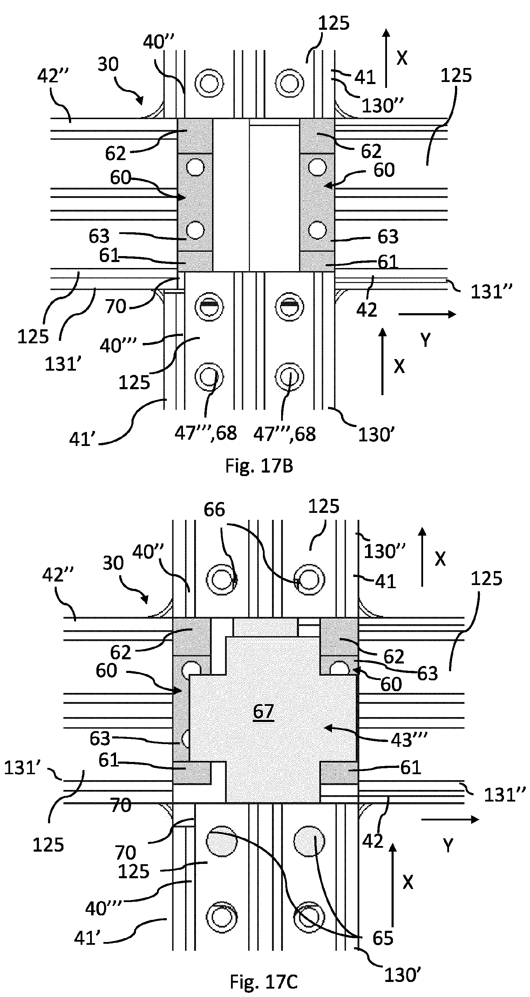

Fig. 17B is a similar top view as Fig. 17A where the splice piece 43‴ has been removed to better illustrate the relative positions of the underlying X bottom profiles 41,41' and Y profiles 42,42" when the thermal expansion joint 35'" are contracted in both the first direction X and the second direction Y, e.g. as a result of expansion of the rails in the first direction X and in the second direction Y.

Fig. 17C is a top view of the third embodiment of the invention, where the thermal expansion joint 35'" has expanded both in the first direction X and in the second direction Y, e.g. as a result of contraction of the rails in the first direction X and in the second direction Y.

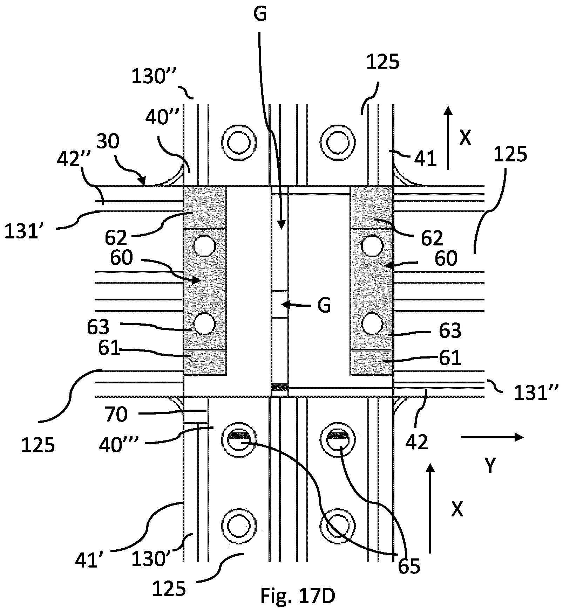

Fig. 17D is a similar top view as Fig. 17C where the splice piece 43‴ has been removed to better illustrate the relative positions of the underlying X bottom profiles 41,41' and Y profiles 42,42" when the thermal expansion joint 35'" has expanded in both the first direction X and the second direction Y.

When comparing the relative position of the thermal expansion joint 35'" in Figs. 17A-17B vs. the thermal expansion joint 35'" in Figs. 17C-17D, it can be seen that the Y profile 42" forming part of the rail section 131' on the left-hand side has moved to the left out of the cut in the corner 70 of the X top profile 40‴ of the rail section 130' below the crossing 30. In addition, the X top profile 40‴ of the rail section 130' and the splice piece 43‴ have moved downwards relative the stationary Y profile 42 of the rail section 131" on the right-hand side of the crossing 30. When comparing Fig. 17B with Fig, 17D, it is seen that it has been formed a gap G between the X bottom profile 41 of the rail section 130" and the X bottom profile 41' of the rail section 130' in Fig. 17D. Similarly, it is formed a gap G between the Y profile 42" of the rail section 131' and the Y profile 42 of the rail section 131".

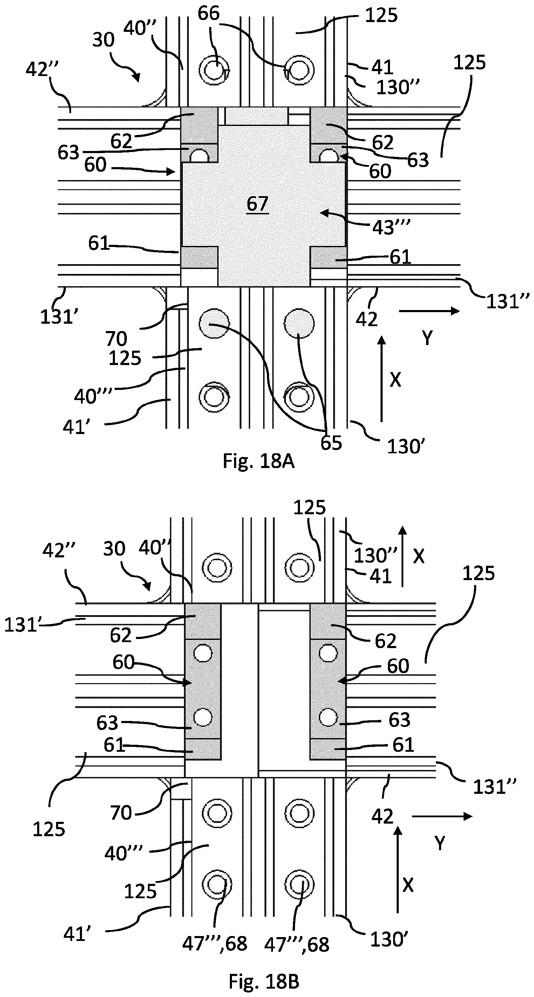

Fig. 18A is a top view of the third embodiment of the invention, where the components in Figs. 16A-16D have been connected to respective X top profiles 40",40‴ and Y profiles 42,42", and where the thermal expansion joint 35'" has expanded in the first direction X and retracted in the second direction Y, e.g. as a result of contraction of the rails in the first direction and expansion of the rails in the second direction Y.

Fig. 18B is a similar top view as Fig. 18A where the splice piece 43‴ has been removed to better illustrate the relative positions of the underlying X bottom profiles 41,41' and Y profiles 42,42" when the thermal expansion joint 35'" has expanded in the first direction X and contracted in the second direction Y.

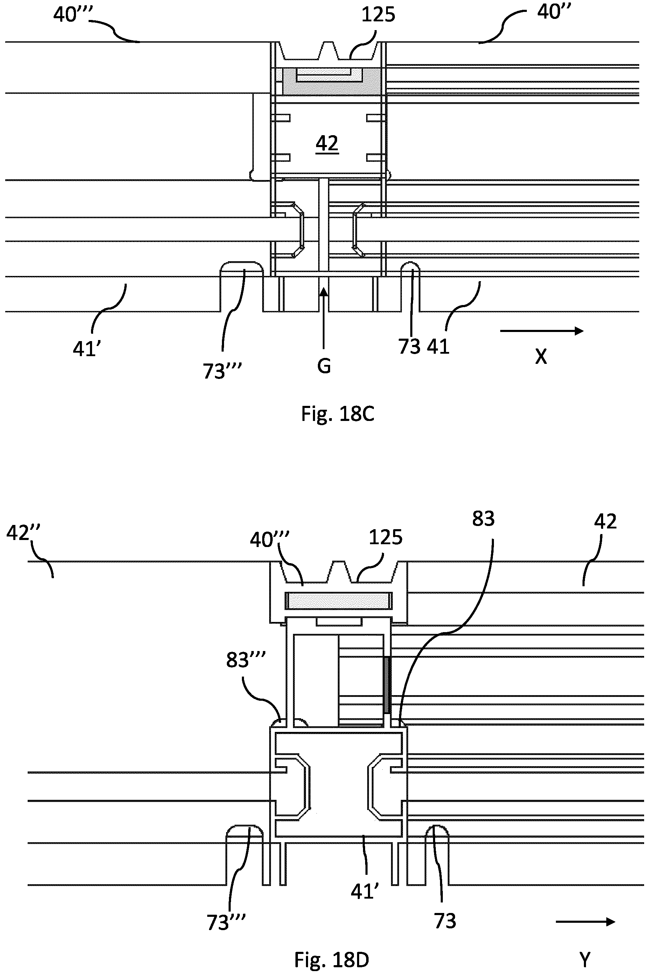

Fig. 18C is a side view of Fig. 18A seen along the Y profile 42' to illustrate the expansion of the thermal expansion joint 35'" in the first direction X.

Fig. 18D is a side view of Fig. 18A seen along the X bottom profile to illustrate the contraction of the thermal expansion joint 35'" in the second direction Y.

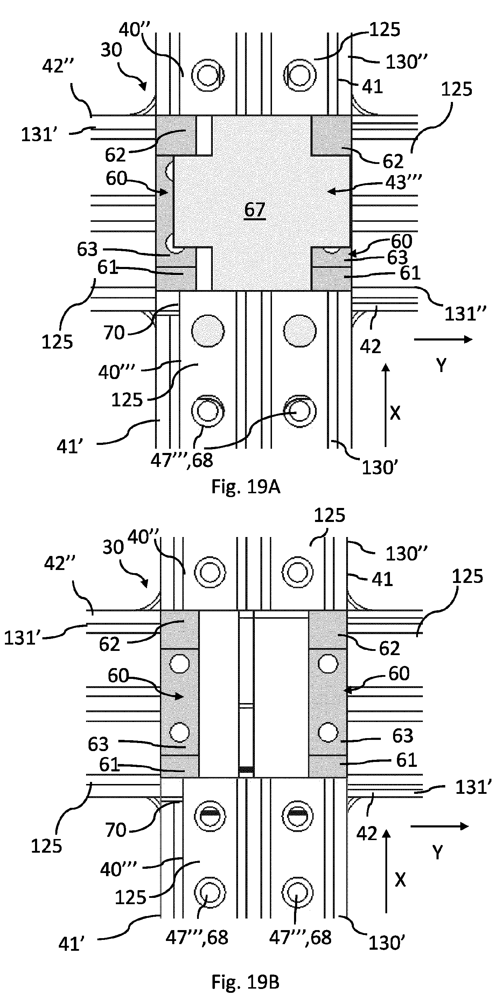

Fig. 19A is a top view of the third embodiment of the invention, where the components in Figs. 16A-16D have been connected to respective X top profiles 40",40‴ and Y profiles 42,42", and where the thermal expansion joint 35'" has contracted in the first direction X and expanded in the second direction Y, e.g. as a result of expansion of the rails in the first direction and contraction of the rails in the second direction Y.

Fig. 19B is a similar top view as Fig. 19A where the splice piece 43‴ has been removed to better illustrate the relative positions of the underlying X bottom profiles 41,41' and Y profiles 42,42" when the thermal expansion joint 35'" has contracted in the first direction X and expanded in the second direction Y.

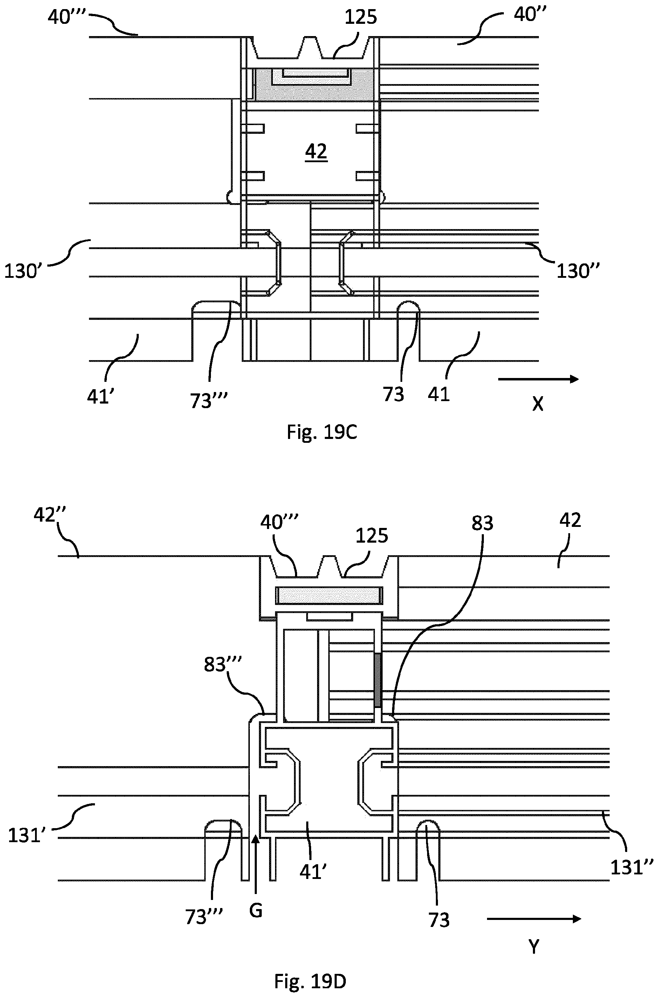

Fig. 19C is a side view of Fig. 19A seen along the prior art Y profile 42 to illustrate the contraction of the thermal expansion joint 35'" in the first direction X.

Fig. 19D a side view of Fig. 19A seen along the X bottom profile 41' according to the first embodiment of the invention to illustrate the expansion of the thermal expansion joint 35'" in the second direction Y.

When comparing Fig. 18C where the thermal expansion joint has expanded in the first direction X and Fig. 19C where the thermal expansion joint has contracted in the first direction X, one can see that a gap G is formed between the prior art X bottom profile 41 forming part of the rail section 130" and the X bottom profile 41' according to the first embodiment of the invention in Fig. 18C. This gap is not present in Fig. 19C.

Similarly, when comparing Fig. 18D where the thermal expansion joint has contracted in the second direction Y and Fig. 19D where the thermal expansion joint has expanded in the second direction Y, one can see that a gap G is formed between the Y profile 42" forming part of the rail section 131' according to the second embodiment of the invention and the perpendicular X bottom profile 41' according to the first embodiment of the invention. This gap G is not present in Fig. 18D.

In the preceding description, various aspects of the storage system, the crossing, the thermal expansion joint and method according to the invention have been described with reference to the illustrative embodiment. For purposes of explanation, specific numbers, systems and configurations were set forth in order to provide a thorough understanding of the system and its workings. However, this description is not intended to be construed in a limiting sense. Various modifications and variations of the illustrative embodiment, as well as other embodiments of the system, which are apparent to persons skilled in the art to which the disclosed subject matter pertains, are deemed to lie within the scope of the present invention.

**LIST OF REFERENCE NUMBERS**

| | |
|---|---|
| 1 | Prior art automated storage and retrieval system |
| 11 | First area |
| 12 | Second area |
| 24 | Lifting device |
| 25 | Lifting bands |
| 26 | Gripping engaging device |
| 27 | Lifting frame |
| 28 | Gripping recess for gripping engaging device |
| 30 | Crossing |
| 35' | Thermal expansion joint (first embodiment) |
| 35" | Thermal expansion joint (second embodiment) |
| 35'" | Thermal expansion joint (third embodiment) |
| 40 | X top profile (prior art) |
| 40' | X top profile (first embodiment) |
| 40" | X top profile (second embodiment) |
| 40‴ | X top profile (third embodiment) |
| 41 | X bottom profile (prior art) |
| 41' | X bottom profile (first embodiment) |
| 42 | Y profile (prior art and first embodiment) |
| 42" | Y profile (second embodiment) |
| 43' | Splice piece (First embodiment) |
| 43‴ | Splice piece (Third embodiment) |
| 44 | First portion |
| 45 | Second portion |
| 46 | Groove |
| 47 | Connection hole (prior art) |
| 47' | Connection hole (first embodiment) |
| 47" | Connection hole (second embodiment) |
| 47‴ | Connection hole (third embodiment) |
| 48 | Opening |
| 49' | Hollow portion (X bottom profile) |
| 49" | Hollow portion (Y profile) |
| 51' | Reinforcement bar (first embodiment) |
| 51" | Reinforcement bar (second embodiment) |
| 52 | Connection piece |
| 53 | Fastening hole |
| 54 | First element |
| 55 | Second element |
| 56 | Third element |
| 57 | Complementary hole |
| 60 | Cradle piece |
| 61 | First portion of cradle piece |
| 62 | Second portion of cradle piece |
| 63 | Intermediate portion of cradle piece |
| 64 | Connection holes (cradle piece) |
| 65 | First portion (of splice piece 43‴) |
| 66 | Second portion (of splice piece 43‴) |
| 67 | Intermediate portion (of splice piece 43‴) |
| 68 | Connection portion |
| 69 | Protruding member |
| 70 | Corner |
| 73 | Cutout (prior art) |
| 73' | Cutout (first embodiment) |
| 73" | Cutout (second embodiment) |
| 73‴ | Cutout (third embodiment) |
| 74 | Lip portion (prior art) |
| 74' | Lip portion (first embodiment) |
| 75 | Upper end face (prior art X) |
| 75' | Upper end face (first embodiment X profile) |
| 76 | Lower end face (prior art X) |
| 76' | Lower end face (first embodiment X profile) |
| 77 | Upper end face (prior art Y) |
| 77' | Upper end face (first embodiment Y profile) |
| 77" | Upper end face (second embodiment Y profile) |
| 78 | Intermediate end face (prior art Y profile) |
| 78' | Intermediate end face (first embodiment Y profile) |
| 78" | Intermediate end face (second embodiment Y profile) |
| 79 | Lower end face (prior art Y) |
| 79" | Lower end face (second embodiment Y profile) |
| 80 | Receiving space X profile (prior art) |
| 80' | Receiving space X profile (first embodiment) |
| 81 | Upper receiving space Y profile (prior art) |
| 81" | Upper receiving space Y profile (second embodiment) |
| 82 | Lower receiving space Y profile (prior art) |
| 82' | Lower receiving space Y profile (first embodiment) |
| 82" | Lower receiving space Y profile (second embodiment) |
| 83 | Recess (prior art) |
| 83" | Recess (second and third embodiment) |
| 84 | Protruding rim |
| 102 | Upright member |
| 103 | Upper edge |
| 104 | Storage volume |
| 105 | Storage column |
| 106 | Storage container |
| 106' | Particular position of storage container |
| 107 | Stack |
| 108 | Rail system |
| 110 | First set of parallel rails (in first direction (*X*)) |
| 111 | Second set of parallel rails (in second direction (*Y*)) |
| 112 | Access opening |
| 113 | Hollow center section |
| 116 | Guide surface |
| 117 | Inside corner |
| 119 | First port column |
| 120 | Second port column |
| 125 | Track |
| 130 | First rail in first direction (X) |
| 130', 130" | Rail section in first direction (Y) |
| 131 | Second rail in second direction (X) |
| 131',131" | Rail section in second direction (Y) |
| 201 | Prior art container handling vehicle |
| 201a | Vehicle body of the container handling vehicle 201 |
| 201b | Drive means / wheel arrangement / first set of wheels in first direction (*X*) |
| 201c | Drive means / wheel arrangement / second set of wheels in second direction (*Y*) |
| 301 | Prior art cantilever container handling vehicle |
| 301a | Vehicle body of the container handling vehicle 301 |
| 301b | Drive means / first set of wheels in first direction (*X*) |
| 301c | Drive means / second set of wheels in second direction (*Y*) |
| 401 | Prior art container handling vehicle |
| 401a | Vehicle body of the container handling vehicle 401 |
| 401b | Drive means / first set of wheels in first direction (*X*) |
| 401c | Drive means / second set of wheels in second direction (*Y*) |
| H1 | Thickness of first portion/first section |
| H2 | Thickness of second portion/second section |
| H3 | Thickness of connection piece |
| L1 | Length of second portion |
| L2 | Length of opening |
| L3 | Length of splice piece |
| W1 | Width of splice piece |
| W2 | Width of opening |
| X | First direction |
| *Y* | Second direction |
| *Z* | Third direction |

The disclosure comprises the following items:
1. A crossing (30; 30'; 30"; 30‴) for a grid-based rail system (108) of an automated storage and retrieval system (1), wherein the crossing (30; 30'; 30"; 30‴) comprises a first rail (130) extending in a first direction (X) and a second rail (131) extending in a second direction (Y) which is perpendicular to the first direction (X), wherein the first and second rails (130,131) each comprise at least one track (125) for guiding wheels (201b,201c;301b,301c;401b,401c) of a container handling vehicle (201;301;401) in a longitudinal direction of said rail (130,131), the first and second rails (130,131) engaging one another to form the crossing (30; 30'; 30"; 30‴) where the at least one track (125) of the first rail (130) crosses a path of the at least one track of the second rail (131), the crossing (30; 30'; 30"; 30‴) being configured to be supported by an upright member (102) from below, and wherein at least one of the first and second rails (130,131) is provided as a pair of rail sections (130', 130"; 131 ', 131 ") arranged in an end-to-end manner in the longitudinal direction of said rail (130,131), the ends of the rail sections (130', 130"; 131', 131") meeting in a central portion of the crossing (30; 30'; 30"; 30‴), and the rail sections (130',130"; 131', 131") being configured to permit a range of movement of one end relative to the other in the longitudinal direction of the said rail (130,131) so as to provide a thermal expansion joint (35',35",35‴) for the said rail (130,131) that is arranged within a volume of the crossing (30; 30'; 30"; 30‴) defined by the engagement of the first and second rails (130,131).
2. The crossing (30; 30'; 30"; 30‴) according to item 1, wherein at least one of the rail sections (130',130";131',131") of the said rail (130,131) comprises a cutout (73';73") on a lower portion thereof, wherein the cutout (73';73") extends in a longitudinal direction of the rail section (130',130";131',131") for receiving an upper edge (103) of the upright member (102) such that the rail section (130',130";131',131") can move in a longitudinal direction relative the upper edge (103) of the upright member (102).
3. The crossing (30; 30'; 30"; 30‴) according to any of the preceding items, wherein the thermal expansion joint is arranged to form a continuous surface for the wheels (201b,201c;301b,301c;401b,401c) of the container handling vehicle (201;301;401).
4. The crossing (30; 30'; 30"; 30‴) according to any of the preceding items, wherein at least one of the first rail (130) or the second rail (131) comprises two tracks (125).
5. The crossing (30; 30'; 30"; 30‴) according to any of the preceding items, wherein the crossing (30; 30'; 30"; 30‴) comprises:
   - an X top profile (40'; 40"; 40‴) extending in the first direction (X);
   - an X bottom profile (41';41") extending in the first direction (X), wherein the X top profile (40'; 40";40‴) is configured to be connected to the X bottom profile (41';41"); and
   - a Y profile (42; 42") extending in the second direction (Y).
6. The crossing (30; 30'; 30"; 30‴) according to item 5, wherein the thermal expansion joint (35') comprises a splice piece (43') having two first portions (44) of a first thickness (H1) and one second portion (45) with a second thickness (H2), wherein the second thickness (H2) is larger than the first thickness (H1).
7. The crossing (30; 30'; 30"; 30‴) according to item 6, wherein one of the first portions (44) is arranged on one side of the second portion (45) and the other first portion (44) is arranged on the other side of the second portion (45), and wherein the X top profile (40') comprises a groove (46) for accommodating one of the first portions (44) of the splice piece (43').
8. The crossing (30; 30'; 30"; 30‴) according to item 7, wherein the X top profile (40') comprises two lip portions (74') and an opening (48) in between the two lip portions (74'), wherein the opening (48) is formed in an extension of the groove (46) and is configured to receive one of the first portions (44) and a part of the second portion (45) of the splice piece (43'), and wherein, when the first portion (44) of the splice piece (43') is positioned in the groove (46), an upper surface of the second portion (45) is flush with a rolling surface of the track (125) of a rail of the first rail (130).
9. The crossing (30; 30'; 30"; 30‴) according to any of the preceding items 5-8, wherein the X bottom profile (41') comprises an upper end face (75') and a lower end face (76'), and wherein a receiving space (80') formed between two opposing upper end faces (75') of the X bottom profile (41') is larger than a volume occupied by a perpendicular Y profile (42) extending in the second direction (Y) such that at least one of the X bottom profiles (41') can move in the first direction (X) relative to a side surface of the perpendicular Y profile (42).
10. The crossing (30; 30'; 30"; 30‴) according to any of the preceding items 5-9, wherein when the thermal expansion joint (35') has expanded, there is formed a gap (G) between the two opposing X bottom profiles (41') of the crossing (30').
11. The crossing (30; 30'; 30"; 30‴) according to any of the preceding items 5-10, wherein the X bottom profile (41') comprises a hollow portion (49') and wherein the crossing (30; 30'; 30"; 30‴) comprises a reinforcement bar (51') having a first end and a second end, and wherein the first end is connectable within the hollow portion (49') and the second end of the reinforcement bar (51') extends out of the hollow portion (51') and is configured to extend into a hollow portion (49') of an opposing X bottom profile (41; 41').
12. The crossing (30; 30'; 30"; 30‴) according to item 5, wherein the thermal expansion joint (35") comprises a connection piece (52) for mating with an identical connection piece (52) oriented in an opposite direction.
13. The crossing (30; 30'; 30"; 30‴) according to item 12, wherein the connection piece (52) has an F-shape and is formed by a first element (54) oriented perpendicular to the second rail (131), and by a second element (55) and a third element (56) connected to the first element and oriented parallel to the second rail (131).
14. The crossing (30; 30'; 30"; 30‴) according to items 12 or 13, wherein a thickness (H3) of the connection piece (52) is chosen such that, when connected, a top surface of the connection piece (52) is flush with a rolling surface of the track (125) of a rail of the second rail (131).
15. The crossing (30; 30'; 30"; 30‴) according to any one of items 12-14, wherein the Y profile (42") comprises an upper end face (77"), an intermediate end face (78") and a lower end face (79"), and wherein an upper receiving space (81") is formed between two opposing Y profiles (42,42") and wherein the connection piece (52) is configured to be received in the upper receiving space (81").
16. The crossing (30; 30'; 30"; 30‴) according to item 15, wherein an upper end of the lower end face (83") comprises a recess (83") with a larger extent in the second direction (Y) than a width in the second direction (Y) of a protruding rim (84) of the X bottom profile (41), such that when the protruding rim (84) is positioned within the recess (83"), the Y profile (42") can move relative the protruding rim (84).
17. The crossing (30; 30'; 30"; 30‴) according to item 15 or 16, wherein a lower receiving space (82") formed between two opposing lower end faces (79") of the Y profile (42") is larger than a volume occupied by a perpendicular X bottom profile (41) extending in the first direction (X) such that at least one of the Y bottom profiles (42") can move in the second direction (Y) relative to a side surface of the perpendicular X bottom profile (41).
18. The crossing (30; 30'; 30"; 30‴) according to any of the preceding 12-17, wherein the Y profile (42") comprises a hollow portion (49") and wherein the crossing (30; 30'; 30"; 30‴) comprises a reinforcement bar (51") having a first end and a second end, and wherein the first end is connectable within the hollow portion (49") and the second end of the reinforcement bar (51") extends out of the hollow portion (51") and is configured to extend into a hollow portion (49') of an opposing Y profile (42; 42").
19. The crossing (30; 30'; 30"; 30‴) according to item 5, wherein the thermal expansion joint (35‴) allows for longitudinal expansion and contraction of both the first rail (130) in the first direction (X) and the second rail (131) in the second direction (Y).
20. The crossing (30; 30'; 30"; 30‴) according to item 19, wherein the thermal expansion joint (35') comprises a splice piece (43‴) having a first portion (65) of a first thickness (H1) and a second portion (66) of the same first thickness (H1), and an intermediate portion (67) with a second thickness (H2) arranged between the first and second portions (65,66).
21. The crossing (30; 30'; 30"; 30‴) according to item 20, wherein the X top profile (40‴) comprises a groove (46) for receiving the first portion (65) of the splice piece (43‴) such that the first portion (65) can be accommodated in the groove (46).
22. The crossing (30; 30'; 30"; 30‴) according to item 21, wherein the second portion (66) is smaller than the groove (46) of the X top profile (40") such that the second portion (66) can be accommodated in the groove (46).
23. The crossing (30; 30'; 30"; 30‴) according to item 21 or 22, wherein the first portion (65) comprises connection portions (68) complementary shaped as connection holes (47‴) of the X top profile (40‴) such that the splice piece (43‴) can be secured to the X top profile (40‴).
24. The crossing (30; 30'; 30"; 30‴) according to any of the preceding items 21-23, wherein the second thickness (H2) of the intermediate portion (67) is selected such that an upper surface of the intermediate portion (67) is flush with a rolling surface of the track (125) of a rail of the first rail (130) of the X top profiles (40‴) when the first portion (65) of the splice piece (43‴) is positioned in the groove (46) of the X top profile (40‴).
25. The crossing (30; 30'; 30"; 30‴) according to any of the preceding items 21-24, wherein the second portion (66) of the splice piece (43‴) is formed as a lip.
26. The crossing (30; 30'; 30"; 30‴) according to any of the preceding items 21-25, wherein the intermediate portion (67) of the splice piece (43‴) is formed as a cross with two protruding members (69) which extend perpendicular relative a longitudinal direction of the splice piece (43‴).
27. The crossing (30; 30'; 30"; 30‴) according to item 26, wherein the two protruding members (69) have a thickness equal to the first thickness (H1) while the remaining part of the intermediate portion (67) is of the second thickness (H2).
28. The crossing (30; 30'; 30"; 30‴) according to any of items 26 or 27, wherein the thermal expansion joint (35‴) features two cradle pieces (60), wherein the cradle pieces (60) feature connection holes (64) for connection to complementary holes (57) of an underlying Y profile (42,42").
29. The crossing (30; 30'; 30"; 30‴) according to item 28, wherein the cradle pieces (60) feature a first portion (61) having the second thickness (H2) and a second portion (62) having the second thickness (H2), and an intermediate portion (63) of the first thickness (H1).
30. The crossing (30; 30'; 30"; 30‴) according to item 29, wherein the intermediate portion (63) is shaped such that the protruding member (69) of the splice piece (43‴) is allowed to slide therein upon expansion and retraction of the first rail (130) or the second rail (131).
31. The crossing (30; 30'; 30"; 30‴) according to any of the preceding items 191-30, wherein the range of movement of one end of a rail section (130',130";131',131") relative to the other in the longitudinal direction of the first or second rail (130,131) correspond to less than a width of a track (125) so that the wheels (201b,201c;301b,301c;401b,401c) of the container handling vehicle (201;301;401) on either of the two tracks (125) can pass over the crossing (30; 30'; 30"; 30‴).
32. A storage system (1) comprising a framework structure (100), the framework structure (100) comprising upright members (102) and a two-dimensional rail system (108) arranged across the top of the upright members (102), the rail system (108) comprises a first set of parallel rails (110) arranged to guide movement of container handling vehicles (201,301,401) in a first direction (X) across the top of the frame structure (100), and a second set of parallel rails (111) arranged perpendicular to the first set of rails (110) to guide movement of the container handling vehicles (401) in a second direction (Y) which is perpendicular to the first direction, the first and second sets of parallel rails (110,111) dividing the rail system (108) into a plurality of access openings (112) in the rail system (108) for lifting and lowering of a storage container (106) between a position above the rail system (108) and a position below the rail system (108), and wherein the storage system (1) comprises at least one crossing (30; 30'; 30"; 30‴) according to any one of claims 1-31 arranged along each rail of the first or second set of parallel rails (110,111) forming a continuous track (125) from one end of the rail system (108) to an opposite end of the rail system (108).
33. The storage system according to item 32, wherein the crossing (30'; 30"; 30‴) is arranged to lie within a vertical projection of a hollow center section (113) of an upright member (102) when supported by the upright members.
34. A method of providing a crossing (30; 30'; 30"; 30‴) in a grid-based rail system (108) of an automated storage and retrieval system (1), the crossing (30; 30'; 30"; 30‴) allowing for thermal expansion and contraction of rails (110,111,130,131) extending through the crossing (30; 30'; 30"; 30‴); the method comprises:
   - positioning a pair of rail sections (130',130";131',131") of a first rail (130) extending in a first direction (X) and a second rail (131) extending in a second direction (Y) on an underlying supporting upright member (102), wherein the second direction is perpendicular to the first direction (X) and wherein the first and second rails (130,131) each comprise at least one track (125) for guiding wheels (201b,201c;301b,301c;401b,401c) of a container handling vehicle (201;301;401) in a longitudinal direction of said rail (130,131);
   - wherein the first and second rails (130,131) engage to form the crossing (30; 30'; 30"; 30‴) where at least one track (125) of the first rail (130) crosses a path of the at least one track of the second rail (131), the rail sections (130',130";131',131") being arranged in an end-to-end manner in a longitudinal direction of a rail and the ends of the rail sections meeting in a central portion of the crossing to permit a range of movement of one end relative to the other in the longitudinal direction of the first or second rail (130,131), thereby providing a thermal expansion joint (35',35",35‴) for the first or second rail (130,131) that is arranged within the crossing (30; 30'; 30"; 30‴) within a volume defined by the engagement of the first and second rails (130,131).
35. The method according to item 34, wherein the method comprises connecting crossings (30; 30'; 30"; 30‴) according to any of the preceding claims 1-33 to rails of a first set of parallel rails (110) extending in the first direction (X) or rails of a second set of parallel rails (111) extending in the second direction (Y) such as to allow for thermal expansion and contraction of the first or second set of parallel rails (110,111).

## Claims

1. A crossing (30; 30'; 30"; 30‴) for a grid-based rail system (108) of an automated storage and retrieval system (1), wherein the crossing (30; 30'; 30"; 30‴) comprises a first rail (130) extending in a first direction (X) and a second rail (131) extending in a second direction (Y) which is perpendicular to the first direction (X), wherein the first and second rails (130,131) each comprise at least one track (125), the first and second rails (130,131) engaging one another to form the crossing (30; 30'; 30"; 30‴), and wherein at least one of the first and second rails (130,131) is provided as a pair of rail sections (130',130";131',131") arranged in an end-to-end manner in the longitudinal direction of said rail (130,131), the ends of the rail sections (130', 130"; 131 ', 131 ") meeting in a central portion of the crossing (30; 30'; 30"; 30‴), and the rail sections (130',130";131',131") being configured to permit a range of movement of one end relative to the other in the longitudinal direction of the said rail (130,131) so as to provide a thermal expansion joint (35',35",35‴) for the said rail (130,131) that is arranged within a volume of the crossing (30; 30'; 30"; 30‴) defined by the engagement of the first and second rails (130,131).

2. The crossing (30; 30'; 30"; 30‴) according to claim 1, wherein the crossing (30; 30'; 30"; 30‴) comprises:
- an X top profile (40'; 40"; 40‴) extending in the first direction (X);
- an X bottom profile (41';41") extending in the first direction (X), wherein the X top profile (40'; 40";40‴) is configured to be connected to the X bottom profile (41';41"); and
- a Y profile (42; 42") extending in the second direction (Y).

3. The crossing (30; 30'; 30"; 30‴) according to claim 2, wherein the thermal expansion joint (35") comprises a connection piece (52) for mating with an identical connection piece (52) oriented in an opposite direction, and optionally wherein the connection piece (52) has an F-shape and is formed by a first element (54) oriented perpendicular to the second rail (131), and by a second element (55) and a third element (56) connected to the first element and oriented parallel to the second rail (131), and optionally wherein a thickness (H3) of the connection piece (52) is chosen such that, when connected, a top surface of the connection piece (52) is flush with a rolling surface of the track (125) of a rail of the second rail (131).

4. The crossing (30; 30'; 30"; 30‴) according to claim 3, wherein the Y profile (42") comprises an upper end face (77"), an intermediate end face (78") and a lower end face (79"), and wherein an upper receiving space (81") is formed between two opposing Y profiles (42,42") and wherein the connection piece (52) is configured to be received in the upper receiving space (81").

5. The crossing (30; 30'; 30"; 30‴) according to claim 4, wherein an upper end of the lower end face (83 ") comprises a recess (83 ") with a larger extent in the second direction (Y) than a width in the second direction (Y) of a protruding rim (84) of the X bottom profile (41), such that when the protruding rim (84) is positioned within the recess (83"), the Y profile (42") can move relative the protruding rim (84).

6. The crossing (30; 30'; 30"; 30‴) according to claims 4 or 5, wherein a lower receiving space (82") formed between two opposing lower end faces (79") of the Y profile (42") is larger than a volume occupied by a perpendicular X bottom profile (41) extending in the first direction (X) such that at least one of the Y bottom profiles (42") can move in the second direction (Y) relative to a side surface of the perpendicular X bottom profile (41).

7. The crossing (30; 30'; 30"; 30‴) according to any of the preceding claims 2-6, wherein the Y profile (42") comprises a hollow portion (49") and wherein the crossing (30; 30'; 30"; 30‴) comprises a reinforcement bar (51") having a first end and a second end, and wherein the first end is connectable within the hollow portion (49") and the second end of the reinforcement bar (51") extends out of the hollow portion (51") and is configured to extend into a hollow portion (49') of an opposing Y profile (42; 42").

8. The crossing (30; 30'; 30"; 30‴) according to claim 2, wherein the thermal expansion joint (35‴) allows for longitudinal expansion and contraction of both the first rail (130) in the first direction (X) and the second rail (131) in the second direction (Y).

9. The crossing (30; 30'; 30"; 30‴) according to claim 8, wherein the thermal expansion joint (35') comprises a splice piece (43‴) having a first portion (65) of a first thickness (H1) and a second portion (66) of the same first thickness (H1), and an intermediate portion (67) with a second thickness (H2) arranged between the first and second portions (65,66).

10. The crossing (30; 30'; 30"; 30‴) according to claim 9, wherein the X top profile (40‴) comprises a groove (46) for receiving the first portion (65) of the splice piece (43‴) such that the first portion (65) can be accommodated in the groove (46) and optionally wherein the second portion (66) is smaller than the groove (46) of the X top profile (40") such that the second portion (66) can be accommodated in the groove (46).

11. The crossing (30; 30'; 30"; 30‴) according to claim 10, wherein the first portion (65) comprises connection portions (68) complementary shaped as connection holes (47‴) of the X top profile (40‴) such that the splice piece (43‴) can be secured to the X top profile (40‴), and optionally wherein the second thickness (H2) of the intermediate portion (67) is selected such that an upper surface of the intermediate portion (67) is flush with a rolling surface of the track (125) of a rail of the first rail (130) of the X top profiles (40‴) when the first portion (65) of the splice piece (43‴) is positioned in the groove (46) of the X top profile (40‴).

12. The crossing (30; 30'; 30"; 30‴) according to any of the preceding claims 10-11, wherein the second portion (66) of the splice piece (43‴) is formed as a lip, and optionally wherein the intermediate portion (67) of the splice piece (43‴) is formed as a cross with two protruding members (69) which extend perpendicular relative a longitudinal direction of the splice piece (43‴), and optionally wherein the two protruding members (69) have a thickness equal to the first thickness (H1) while the remaining part of the intermediate portion (67) is of the second thickness (H2).

13. The crossing (30; 30'; 30"; 30‴) according to claim 12, wherein the thermal expansion joint (35‴) features two cradle pieces (60), wherein the cradle pieces (60) feature connection holes (64) for connection to complementary holes (57) of an underlying Y profile (42,42"), and optionally the cradle pieces (60) feature a first portion (61) having the second thickness (H2) and a second portion (62) having the second thickness (H2), and an intermediate portion (63) of the first thickness (H1).

14. The crossing (30; 30'; 30"; 30‴) according to claim 13, wherein the intermediate portion (63) is shaped such that the protruding member (69) of the splice piece (43‴) is allowed to slide therein upon expansion and retraction of the first rail (130) or the second rail (131).

15. The crossing (30; 30'; 30"; 30‴) according to any of the preceding claims 8-14, wherein the range of movement of one end of a rail section (130',130";131',131") relative to the other in the longitudinal direction of the first or second rail (130,131) correspond to less than a width of a track (125) so that guiding wheels (201b,201c;301b,301c;401b,401c) of a container handling vehicle (201;301;401) on either of the two tracks (125) can pass over the crossing (30; 30'; 30"; 30‴).
